# EUROPÄISCHE PATENTSCHRIFT

(11) **EP 4 577 789 B1**
(45) Veröffentlichungstag und Bekanntmachung des Hinweises auf die Patenterteilung: **15.04.2026**
(21) Anmeldenummer: 24799230.8
(22) Anmeldetag: 30.10.2024
(51) Int. Cl.: F27B 1/00, F27B 1/02, F27B 1/22, F27B 15/00, F27B 15/10, C04B 2/12, F27B 1/10, F27D 17/10

(54) **GLEICHSTROM-GEGENSTROM-REGENERATIV-SCHACHTOFEN UND VERFAHREN ZUM BRENNEN VON KARBONATGESTEIN**
PARALLEL-FLOW REGENERATIVE SHAFT KILN AND METHOD FOR BURNING CARBONATE ROCK
FOUR À CUVES DE RÉGÉNÉRATION À ÉCOULEMENT PARALLÈLE ET PROCÉDÉ DE COMBUSTION D'UNE ROCHE CARBONATÉE

(30) Priorität: 07.11.2023 DE 102023130763; 07.11.2023 BE 202305910
(43) Veröffentlichungstag der Anmeldung: 02.07.2025
(73) Patentinhaber: Maerz Ofenbau AG, 8002 Zürich (CH); thyssenkrupp Polysius GmbH, 59269 Beckum (DE); thyssenkrupp AG, 45143 Essen (DE)
(72) Erfinder: PIRINGER, Hannes, 5712 Beinwil am See (CH)
(74) Vertreter: thyssenkrupp Intellectual Property GmbH
(86) Internationale Anmeldenummer: PCT/EP2024/080727
(87) Internationale Veröffentlichungsnummer: WO 2025/098857

(56) Entgegenhaltungen:
- EP-B1- 4 182 622
- US-A- 4 740 157

## Beschreibung

Die Erfindung betrifft einen Gleichstrom-Gegenstrom-Regenerativ-Schachtofen (GGR-Schachtofen) sowie ein Verfahren zum Brennen und Kühlen von Material, wie Karbonatgesteinen, mit einem GGR-Schachtofen.

Das Brennen von Karbonatgestein in einem GGR-Schachtofen ist seit etwa 60 Jahren bekannt. Ein derartiger, beispielsweise aus der DE 10 2021 204 176 A1 bekannter GGR-Schachtofen weist zwei vertikale, parallele Schächte auf, die zyklisch arbeiten, wobei nur in einem Schacht, dem jeweiligen Brennschacht, gebrannt wird, während der andere Schacht als Regenerativschacht arbeitet. Dem Brennschacht werden Oxidationsgas im Gleichstrom mit dem Material und Brennstoff zugeführt, wobei die dabei entstehenden heißen Abgase zusammen mit der von unten zugeführten, erwärmten Kühlluft über den Überstromkanal in den Regenerativschacht geleitet werden, wo die Abgase im Gegenstrom zum Material nach oben abgeleitet werden und das Material dabei vorwärmen. Das Material wird üblicherweise von oben zusammen mit dem Oxidationsgas in den Schacht aufgegeben, wobei Brennstoffe in der Brennzone eingedüst werden. Weitere Beispiele für den bekannten Stand der Technik sind EP4182622B1 oder US4740157A.

Das zu brennende Material passiert üblicherweise in jedem Schacht eine Vorwärmzone zum Vorwärmen des Materials, eine sich daran anschließende Brennzone, in der das Material gebrannt wird und eine sich daran anschließende Kühlzone, in der Kühlluft dem heißen Material zugeführt wird.

Des Weiteren steigt die Nachfrage nach umweltfreundlicher Herstellung von Branntkalk, sodass bestimmte Anforderungen an den CO₂-Gehalt des Abgases zur anschließenden Nachbehandlung erfüllt werden müssen. Die Herstellung von umweltfreundlichem Kalk soll allerdings möglichst kostengünstig erfolgen und lediglich minimale Umbaumaßnahmen bestehender Anlagen erfordern. Des Weiteren soll der Betrieb der Kalköfen möglichst energieeffizient erfolgen. Der spezifische Energieverbrauch eines GGR-Schachtofen soll daher möglichst gering sein, wobei gleichzeitig die technische Komplexität, insbesondere die Anzahl an wartungsaufwändigen Komponenten, reduziert werden soll.

Davon ausgehend ist es Aufgabe der vorliegenden Erfindung, einen GGR-Schachtofen und ein Verfahren zum Brennen von Karbonatgestein mit einem GGR-Schachtofen bereitzustellen, mit welchem Kalk mit einer hohen Reaktivität bei gleichzeitiger CO₂-Abscheidung aus dem Abgas hergestellt wird, wobei die Kalkherstellung energieeffizient und kostengünstig erfolgt.

Diese Aufgabe wird erfindungsgemäß durch eine Vorrichtung mit den Merkmalen des unabhängigen Vorrichtungsanspruchs 1 und durch ein Verfahren mit den Merkmalen des unabhängigen Verfahrensanspruchs 15 gelöst. Vorteilhafte Weiterbildungen ergeben sich aus den abhängigen Ansprüchen.

Nach einem ersten Aspekt umfasst die Erfindung einen Gleichstrom-Gegenstrom-Regenerativ-Schachtofen zum Brennen und Kühlen von Material, wie Karbonatgesteinen, mit zwei Schächten, die abwechselnd als Brennschacht und als Regenerativschacht betreibbar und mittels eines Überströmkanals miteinander verbunden sind, wobei jeder Schacht in Strömungsrichtung des Materials eine Vorwärmzone zum Vorwärmen des Materials, eine Brennzone zum Brennen des Materials und eine Kühlzone zum Kühlen des Materials aufweist, wobei jeder Schacht einen Abgasauslass zum Auslassen von Abgas aus dem Schacht aufweist. Der GGR-Schachtofen weist eine Kühlgasleitung zum Leiten von Kühlgas von der Kühlzone in die Vorwärmzone auf. Die Kühlgasleitung ist beispielsweise als Bypassleitung zur Umgehung der Brennzone ausgebildet. Insbesondere ist die Kühlgasleitung gastechnisch parallel zu den Verbrennungsgasen der Brennzone angeordnet. Jeder Schacht weist vorzugsweis eine Kühlgasleitung auf.

Eine solche Kühlgasleitung bietet den Vorteil, dass die aufgewärmte Kühlluft der Vorwärmzone zugeführt wird und somit zur Materialvorwärmung genutzt werden kann. Zusätzliche Rekuperatoren zum Wärmeaustausch mit dem Kühlgas und/ oder dem Abgas sind nicht notwendig. Dadurch wird der Energieverbrauch des GGR-Schachtofens deutlich reduziert und zusätzlich die Komplexität verringert.

Bei dem zu brennenden Material handelt es sich vorzugsweise um Kalkstein oder Dolomitstein mit einer Korngröße von 10mm bis 200mm, vorzugsweise von 15 bis 120mm, höchstvorzugsweise 30mm bis 100mm. Bei dem Kühlgas handelt es sich beispielsweise um Luft.

Der Gleichstrom-Gegenstrom-Regenerativ-Schachtofen weist mindestens zwei Schächte auf, die vorzugsweise parallel zueinander und vertikal angeordnet sind. Die Schächte weisen vorzugsweise jeweils einen eckigen, dreieckigen, viereckigen, rechteckigen, runden, ovale, vieleckigen, halbkreisförmigen, teilkreisförmigen oder kreisförmigen Querschnitt auf. Die Schächte sind abwechselnd als Brennschacht und als Regenerativschacht betreibbar, wobei jeder Schacht in Strömungsrichtung des Materials eine Vorwärmzone zum Vorwärmen des Materials, eine Brennzone zum Brennen des Materials und eine Kühlzone zum Kühlen des Materials aufweist. Jeder Schacht weist vorzugsweise einen Materialeinlass zum Einlassen von zu brennendem Material in den Schacht auf, wobei sich der Materialeinlass insbesondere am oberen Ende des jeweiligen Schachts befindet, sodass das Material schwerkraftbedingt in den jeweiligen Schacht fällt. Der Materialeinlass und/ oder der Materialauslass ist/sind insbesondere als Schleuse zum Einlassen und/ oder Auslassen von Material in den Schachtofen ausgebildet. Ein als Schleuse ausgebildeter Materialeinlass ist vorzugsweise derart ausgestaltet, dass lediglich das zu brennende Rohmaterial in den Schacht gelangt, nicht aber die Umgebungsluft. Auch ein Austreten von Gas über den Materialeinlass aus dem Schacht wird durch die Materialschleuse verhindert. Vorzugsweise ist die Schleuse derart ausgebildet, dass sie den Schacht luftdicht gegen die Umgebung abdichtet und einen Eintritt von Feststoffen, wie das zu brennende Gut, in den Schacht erlaubt. Unter der Brennzone, Vorwärmzone und Kühlzone sind vorzugsweise die Bereiche des Schachts zu verstehen, die mit Material gefüllt sind. Materialfreie Räume die beispielsweise durch eine Wand von dem mit Material gefüllten Bereichen des Schachts abgetrennt sind, sind vorzugsweise nicht Teil der Vorwärmzone, Brennzone oder Kühlzone.

Der Überströmkanal ist zur gastechnischen Verbindung der beiden Schächte ausgebildet und verbindet vorzugsweise die Brennzonen der Schächte miteinander. Im Betrieb des GGR-Schachtofens wird jeweils einer der Schächte als Brennschacht betrieben und ist aktiv, wobei der jeweils andere Schacht als Regenerativschacht betrieben wird und passiv ist. Der GGR-Schachtofen wird insbesondere zyklisch betrieben, wobei nach Ablauf der Zykluszeit die Funktion der Schächte getauscht wird. Dieser Vorgang wiederholt sich fortlaufend. In dem als Brennschacht betriebenen, aktiven Schacht wird über die Brennerlanzen ein Brennstoff in die Brennzone eingeleitet. Das zu brennende Material wird in der Vorwärmzone des Brennschachts vorzugsweise auf eine Temperatur von etwa 700°C erwärmt. In dem als Brennschacht betriebenen Schacht ist die Brennzone als Gleichstrombrennzone ausgebildet, wobei das zu brennende Material parallel zu dem Gas strömt. Das Gas strömt innerhalb des Brennschachts von der Vorwärmzone in die Brennzone und anschießend über den Überströmkanal in die Brennzone und die Vorwärmzone des Regenerativschachts. In dem als Regenerativschacht betriebenen Schacht strömt das Gas in der Vorwärmzone und der Brennzone im Gegenstrom zu dem zu brennenden Material.

Sowohl in dem Brennschacht als auch in dem Regenerativschacht wird Kühlgas im Gegenstrom zu dem zu kühlenden Material durch die Kühlzone geleitet und vorzugsweise vollständig über die Kühlgasleitung aus der Kühlzone, insbesondere aus dem Schacht ausgelassen, sodass vorzugsweise kein Kühlgas in die Brennzone strömt. Vorzugsweise ist die Kühlgasleitung und/ oder der Kühlgasablass derart angeordnet, dass mindestens 60%, insbesondere mindestens 70%, vorzugsweise mindestens 80% bis mindestens 90% der dem GGR- Schachtofen zugeführten Kühlgasmenge über die Kühlgasleitung aus der Kühlzone, insbesondere aus dem Schacht ausgelassen wird. Die Kühlgasleitung ist vorzugsweise separat zu der Brennzone, insbesondere dem Schacht, angeordnet. Insbesondere ist der Kühlgasablass und/ oder die Kühlgasleitung derart angeordnet und ausgebildet, dass 85% bis 115%, insbesondere 90% bis 110%, vorzugsweise 105% der dem GGR-Schachtofen zugeführten Kühlgasmenge als Kühlgas über den Kühlgasablass und die Kühlgasleitung abgeführt wird. Es ist ebenfalls denkbar, dass dem Brennschacht die gesamte Kühlluft oder zumindest mehr Kühlluft als dem Regenerativschacht zugeführt wird. Damit wird verhindert, dass beispielsweise ein Anteil des Ofenabgases aus dem Brennschacht über den unteren Verbindungskanal strömt. Beispielsweise wird dem Brennschacht 60 - 100% der Kühlluft zugeführt.

Das Abgas wird vorzugsweise ausschließlich aus einem Schacht, insbesondere dem Regenerativschacht, ausgelassen. Den Abgasauslässen sind vorzugsweise Regelorgane, wie Klappen, Ventilatoren oder Ventile nachgeschaltet, über welche die Menge an abzuführendem Abgas einstellbar ist. Das ausgelassene Abgas wird vorzugsweise dem jeweils anderen Schacht, insbesondere dem Brennschacht zugeführt. Vorzugsweise wird lediglich ein Teil des aus dem Regenerativschacht ausgelassenen Abgases zumindest einem Schacht wieder zugeführt. Ein Teil des aus dem Regenerativschacht ausgelassenen Abgases wird beispielsweise aus dem GGR-Schachtofen abgeführt und beispielweise einer weiteren Behandlung, wie einer Sequestrierung, zugeführt. Beispielsweise wird das aus dem Regenerativschacht ausgelassene Abgas einem Pufferspeicher zugeführt und darin zwischengespeichert. Das Abgas umfasst vorzugsweise CO₂ und optional H₂O. Der GGR-Schachtofen weist vorzugsweise einen Verbrennungsgaseinlass zum Einlassen von Verbrennungsgas in die Vorwärmzone oder die Brennzone auf, wobei der Abgasauslass optional über eine Abgasrückführungsleitung mit dem Verbrennungsgaseinlass verbunden ist.

Der Brennzone und/ oder der Vorwärmzone des als Brennschacht betriebenen Schachts wird vorzugsweise ein Brennstoff über eine Brennstoffleitung zugeführt. Vorzugsweise wird der Brennstoff Brennerlanzen zugeführt, die in der Brennzone und/ oder der Vorwärmzone angeordnet sind. Bei dem Brennstoff handelt es sich beispielsweise um ein Brenngas, wie Hochofengas oder Erdgas oder Kohlenstaub oder Biomasse oder flüssige Brennstoffe. In der Brennzone wird das Material vorzugsweise auf eine Temperatur von etwa 1050°C erhitzt.

Jeder Schacht weist vorzugsweise eine Mehrzahl von Brennerlanzen auf, die sich zumindest teilweise durch die Vorwärmzone erstrecken und insbesondere in die Brennzone des jeweiligen Schachts münden und zum Leiten von beispielsweise Brennstoff und/ oder einem Oxidationsgas, wie Luft oder mit Sauerstoff angereicherte Luft oder reinem Sauerstoff, dienen. Der GGR-Schachtofen weist vorzugsweise einen Verbrennungsgaseinlass auf, der mit einer Verbrennungsgasquelle verbunden ist, die ein Verbrennungsgas mit einem Sauerstoffgehalt von mehr als 60vol%, vorzugsweise mehr als 75vol%, insbesondere mehr als 80vol% bis mehr als 95vol% Sauerstoff umfasst.

Jeder Schacht weist vorzugsweise jeweils einen Kühlgaseinlass zum Einlassen von Kühlgas in die Kühlzone auf, dem jeweils ein Regelorgan zur Einstellung der Menge an dem jeweiligen Kühlgaseinlass zugeführtem Kühlgas, zugeordnet ist und wobei die Regelorgane derart eingestellt sind, dass dem Brennschacht eine größere Kühlluftmenge zugeführt wird als dem Regenerativschacht. Bei dem Regelorgan handelt es sich beispielsweise um ein stufenlos einstellbares Ventil oder eine Klappe. Das Regelorgan ist beispielsweise dem Kühlgaseinlass vorgeschaltet und insbesondere in einer mit dem Kühllufteinlass verbunden Kühlgasleitung angeordnet. Vorzugsweise sind die Regelorgane derart ausgebildet und eingerichtet, dass dem Brennschacht 70% bis 100%, vorzugsweise 90% der dem GGR-Schachtofen zugeführten Gesamtkühlgasmenge zugeführt wird.

Eine Rückführung des Abgases in zumindest einen Schacht ermöglicht die Herstellung von Kalk mit einer hohen Reaktivität, wobei gleichzeitig Prozessgas mit einem CO₂-Gehalt von mehr als 30vol%, insbesondere mehr als 50vol%, vorzugsweise mehr als 70vol% oder mehr als 90vol% bezogen auf trockenes Gas hergestellt wird. Bei einem solchen Prozessabgas ist es möglich, dieses mit geringerem Aufwand zu verflüssigen und zu sequestrieren. Beispielsweise wird das verflüssigte Prozessabgas weiteren Verfahrensschritten zugeführt oder gelagert. Alternativ kann mit dem vorangehend beschriebenen GGR-Schachtofen auch Abgas mit weniger CO₂-Gehalt, beispielsweise 40% bis 50% für die Sodaherstellung oder 30% bis 35% bezogen auf das trockene Gas für die Herstellung von Rübenzucker oder gefälltem Kalziumkarbonat, erzeugt werden.

Gemäß einer Erkenntnis der Erfinder, strömt das sauerstoffhaltige Kühlgas im Wesentlichen separat zu dem Verbrennungsgas innerhalb der Schächte, insbesondere innerhalb der Vorwärmzone, sodass es nur zu einer sehr geringen Vermischung der Gasströme des Verbrennungsgases und des Kühlgases kommt.

Gemäß einer ersten Ausführungsform ist die Kühlgasleitung außerhalb oder innerhalb des Schachts angeordnet. Vorzugsweise erstreckt sich die Kühlgasleitung vollständig außerhalb des Schachts und insbesondere gastechnisch parallel zu der Brennzone des jeweiligen Schachts, insbesondere des Regenerativschachts. Optional ist die Kühlgasleitung vollständig innerhalb des Schachts angeordnet und insbesondere über ein Trennmittel, wie eine Trennwand oder ein Rohr, gastechnisch von dem übrigen Bereich der Brennzone und/ oder der Vorwärmzone getrennt. Vorzugsweise ist die Kühlgasleitung bei einem GGR-Schachtofen mit eckigen Schachtquerschnitten innerhalb des Schachts angeordnet. Insbesondere ist die Kühlgasleitung innerhalb des Schachts in einem dem Überströmkanal gegenüberliegenden schachtwandnahen Bereich angeordnet. Im Vergleich zu bekannten GGR-Schachtöfen werden die Gase in dem jeweiligen Schacht weniger stark vermischt, da das Kühlgas nicht durch die Brennzone des Regenerativschachtes strömt.

Gemäß einer weiteren Ausführungsform weist der Schachtofen einen Kühlgasablass zum Auslassen von Kühlgas aus der Kühlzone, insbesondere aus dem Schacht, auf, wobei der Kühlgasablass innerhalb der Kühlzone angeordnet ist und mit der Kühlgasleitung gastechnisch verbunden ist. Der Kühlgasablass ist vorzugsweise als Öffnung in der Schachtwand ausgebildet ist. Das Kühlgas strömt vorzugsweise vollständig durch den Kühlgasablass aus dem jeweiligen Schacht, vorzugsweise ausschließlich aus der Kühlzone des Schachts, heraus. Beispielsweise ist der Kühlgasablass schlitzförmig ausgebildet und erstreckt sich umfangsmäßig, insbesondere horizontal in der Schachtwand der Kühlzone.

Gemäß einer weiteren Ausführungsform weist der Schachtofen einen Kühlgaseinlass in der Vorwärmzone zum Einlassen von Kühlgas in die Vorwärmzone auf, der mit der Kühlgasleitung gastechnisch verbunden ist. Der Kühlgasablass ist insbesondere über die Kühlgasleitung mit einem Kühlgaseinlass zum Einlassen des Kühlgases in den Schacht verbunden. Der Kühlgasablass ist vorzugsweise vollständig innerhalb der Kühlzone, angeordnet, wobei der Kühlgaseinlass innerhalb der Vorwärmzone, insbesondere am unteren Ende der Vorwärmzone, des jeweilige Schachts angeordnet ist. Vorzugsweise weist jeder Schacht jeweils einen Kühlgasablass und jeweils einen Kühlgaseinlass auf, die miteinander über die Kühlgasleitung zum Leiten des Kühlgases von dem Kühlgasablass zu dem Kühlgaseinlass verbunden sind. Der Kühlgaseinlass ist insbesondere bei einem GGR-Schachtofen mit einem eckigen Querschnitt, an der dem Überströmkanal gegenüberliegenden Schachtwand angeordnet. Nach einer Erkenntnis der Erfinder kommt es innerhalb der Vorwärmzone des Regenerativschachtes nur zu einer geringen Vermischung des Kühlgases mit den CO₂-hältigen Verbrennungsgasen der Brennzone. Somit dient die Einleitung des Kühlgases in die Vorwärmzone als zusätzliche Wärmequelle für die Vorwärmung des Materials und sorgt für einen energieeffizienten Ofenbetrieb.

Gemäß einer weiteren Ausführungsform ist der Kühlgaseinlass schlitzförmig ausgebildet. Beispielsweise erstreckt sich der Kühlgaseinlass, bei einem GGR-Schachtofen mit runden Schachtquerschnitten, umfangsmäßig um die Vorwärmzone, insbesondere vollständig über den gesamten, herum. Optional erstreckt sich der Kühlgaseinlass, bei einem GGR-Schachtofen mit eckigen Schachtquerschnitten, horizontal, insbesondere vollständig über die Breite der dem Überströmkanal gegenüberliegenden Schachtwand.

Gemäß einer weiteren Ausführungsform weist der Schachtofen eine Trennwand auf, die innerhalb des Schachts angeordnet ist und zumindest teilweise die Kühlgasleitung ausbildet. Die mittels der Trennwand ausgebildete Kühlgasleitung erstreckt sich vorzugsweise vollständig innerhalb des Schachts. Insbesondere weist jeder Schacht jeweils eine Trennwand auf. Die Trennwand erstreckt sich vorzugsweise vertikal, von der Kühlzone oder der Brennzone bis zur Schachtdecke. Insbesondere ist das untere Ende der Trennwand auf der Höhe des Überströmkanals angeordnet, wobei das obere Ende der Trennwand vorzugswiese gasdicht an der Schachtdecke anliegt. Insbesondere erstreckt sich die Trennwand über die gesamte Breite, insbesondere Tiefe, des jeweiligen Schachts und ist vorzugsweise geometrisch parallel zu der dem Überströmkanal gegenüberliegenden Schachtwand ausgerichtet.

Gemäß einer weiteren Ausführungsform ist der Kühlgasablass zum Ablassen von Kühlgas aus der Kühlzone zwischen der Trennwand und der Innenwand des Schachts ausgebildet. Die Trennwand bildet vorzugsweise zusammen mit der Innenwand des Schachts, insbesondere des Regenativschachts, die Kühlgasleitung aus. Die Kühlgasleitung umfasst beispielhaft etwa 20 - 40%, vorzugsweise etwa 33% des Volumens der Brennzone und/ oder der Vorwärmzone. Vorzugsweise weist die Kühlgasleitung einen Verbrennungsgaseinlass zum Einleitung von mit Sauerstoff angereichertem Abgas auf. Der GGR-Schachtofen weist vorzugsweise einen weiteren Verbrennungsgaseinlass in jedem Schacht auf, über welchen rezirkuliertes und mit Sauerstoff angereichertes Abgas in den Brennschacht außerhalb der Kühlgasleitung eingeführt wird. Vorzugsweise strömt die Kühlluft nach einer Erkenntnis der Erfinder, ausschließlich an dem äußeren, dem Überströmkanal gegenüberliegenden Schachtabschnitt, sodass diese durch die Trennwand gastechnisch von dem Verbrennungsgas der Brennzone getrennt wird. Eine Vermischung der Brenngase und der Kühlgase wird somit zuverlässig verhindert.

Gemäß einer weiteren Ausführungsform weist der Schachtofen einen Kühlgasauslass zum Auslassen des Kühlgases aus dem Schacht auf und wobei der Kühlgasauslass in der Vorwärmzone des Schachts angeordnet ist. Der Kühlgasauslass ist beispielsweise am oberen Ende der Vorwärmzone angeordnet. Vorzugsweise ist der Kühlgasauslass in der Außenwand des Schachts angeordnet. Insbesondere erstreckt sich der Kühlgasauslass vollständig durch die Außenwand des Schachts hindurch und ist insbesondere in der die Vorwärmzone oder die Brennzone umgebenden Außenwand angeordnet. Vorzugsweise weist der GGR-Schachtofen eine feuerfeste Ausmauerung auf, die sich beispielsweise von der Kühlzone bis zur Vorwärmzone, insbesondere bis zu einem unteren Bereich der Vorwärmzone erstreckt. Der Kühlgasauslass ist vorzugsweise oberhalb der Ausmauerung oder an einem oberen Endbereich der Ausmauerung angeordnet. Der Kühlgasauslass ist vorzugsweise vollständig in der Vorwärmzone oder der Brennzone angeordnet, sodass die Kühlluft von der Kühlzone insbesondere vollständig in die Brennzone strömt. Ein in der Außenwand der Vorwärmzone oder der Brennzone angeordneter Kühlgasauslass bietet eine konstruktiv sehr einfache Lösung des Kühlgasabzugs. Bestehenden Kalköfen können ohne große Aufwand umgerüstet werden.

Jeder Schacht weist vorzugsweise zumindest einen Abgasauslass, beispielsweise an dem oberen Ende des Schachts innerhalb der Vorwärmzone, auf. Vorzugsweise ist der Abgasauslass oberhalb der Materialsäule in einem materialfreien Bereich der Vorwärmzone angeordnet. Jeder Schacht weist vorzugsweise zumindest jeweils einen Kühlgasauslass auf, wobei vorzugsweise ausschließlich der in dem als Regenerativschacht betriebenen Schacht angeordnete Kühlgasauslass geöffnet ist und der Kühlgasauslass des Brennschachts gastechnisch verschlossen ist. Der GGR-Schachtofen weist vorzugsweise eine oder eine Mehrzahl von Brennerlanzen auf, die derart angeordnet sind, dass sie in die Brennzone münden, wobei der Kühlgasauslass in Gasströmungsrichtung des Regenerativschachts stromabwärts zumindest einer der Mündungen der Brennerlanzen angeordnet ist. Vorzugsweise ist der Kühlgasauslass in Gasströmungsrichtung stromabwärts aller Mündungen der Brennerlanzen angeordnet.

Vorzugsweise weist jeder Schacht einen Kühlgasauslass auf, wobei jedem Kühlgasauslass jeweils ein Regelorgan zur Einstellung der über den Kühlgasauslass abzuführenden Kühlgasmenge zugeordnet ist und wobei das dem Kühlgasauslass des Brennschachts zugeordnete Regelorgan geschlossen ist, sodass vorzugsweise kein Kühlgas über den Kühlgasauslass des Brennschachts abführbar ist. Vorzugsweise ist der Kühlgasauslass mit einer Kühlgasabzugsleitung verbunden, die außerhalb des Schachts angeordnet ist. Das Regelorgan ist vorzugsweise gastechnisch mit dem Kühlgasauslass verbunden und insbesondere in der Kühlgasabzugsleitung angeordnet. Bei dem Regelorgan handelt es sich beispielsweise um eine Klappe oder ein Ventil, das stufenlos zwischen einer geöffneten Position und einer geschlossenen Position verstellbar ist. Das dem Kühlgasauslass des Regenerativschachts zugeordnete Regelorgan ist vorzugsweise derart ausgebildet und eingerichtet, dass 85% bis 115%, insbesondere 90% bis 110%, vorzugsweise 105% der dem GGR-Schachtofen zugeführten Kühlgasmenge als Kühlgasabluft über den Kühlgasauslass des Regenerativschachts abgeführt wird. Die Kühlgasabzugsleitung ist beispielsweise mit dem Verbrennungsgaseinlass, insbesondere mit der Abgasrückführungsleitung zur Leitung des aus dem Abgasauslass ausgelassenen Abgases verbunden, sodass das aus dem Kühlgasauslass abgeführte Kühlgas dem Verbrennungsgaseinlass, insbesondere der Brennzone des Brennschachts zugeführt wird. Vorteilhafterweise wird bei einer solchen Verschaltung kein CO₂-haltiges Gas über den Kühlgasauslass in die Atmosphäre entlassen, sondern das gesamte Abgas wird über den Abgasauslass vorzugsweise einer weiteren Verarbeitung oder einer Speicherung zugeführt.

Der Kühlgasauslass ist vorzugsweise in einem dem Überströmkanal abgewandten Bereich der Außenwand der Vorwärmzone oder der Brennzone angeordnet. Der GGR-Schachtofen weist vorzugsweise einen direkten oder indirekten Überströmkanal auf zur direkten oder indirekten Verbindung des Brennschachts mit dem Regenerativschacht. Beispielsweise weist der GGR-Schachtofen einen Ringkanal auf, der auf der gleichen Höhe mit dem Überströmkanal die Schächte gastechnisch miteinander verbindet. Beispielsweise weist der GGR-Schachtofen keinen Ringkanal auf, in diesem Fall werden die Schächte direkt über den Überströmkanal gastechnisch miteinander verbunden. Beispielhaft weisen die Brennzone und die Vorwärmzone der Schächte einen über die Schachtlänge im Wesentlichen konstanten Querschnitt auf. Die radial nach außen von dem Überströmkanal weg weisende Außenwand der Schächte erstreckt sich insbesondere ausschließlich vertikal über die gesamte Schachtlänge, insbesondere über die Länge der Brennzone und der Kühlzone. Die Kühlzone weist vorzugsweis einen sich in Richtung des Überströmkanals vergrößernden Querschnitt auf, der in den Überströmkanal mündet. Vorzugsweise sind die Schächte des GGR-Schachtofens vollständig mit Material gefüllt, sodass insbesondere in der Brennzone und der Kühlzone, kein materialfreier Ringraum auf der Höhe des Überströmkanals ausgebildet ist.

Beispielsweise erstreckt sich der Kühlgasauslass in der Außenwand des Schachts in horizontaler Richtung. Beispielsweise ist der Kühlgasauslass als horizontaler Schlitz ausgebildet. Insbesondere erstreckt sich der Kühlgasauslass über die gesamte Breite der dem Überströmkanal gegenüberliegenden Außenwand des Schachts. Beispielsweise umfasst der Kühlgasauslass eine Mehrzahl von Durchlassöffnungen in der Schachtaußenwand, die beispielsweise in horizontaler Richtung nebeneinander und vorzugsweise auf einer Höhe angerordnet sind. Optional ist der Kühlgasauslass als Ringkanal ausgebildet. Bei einem GGR-Schachtofen mit der vorangehend beschriebenen Trennwand wird beispielsweise über den Kühlgasauslass rezirkuliertes und mit Sauerstoff angereichertes Abgas in die Kühlgasleitung zwischen der Trennwand und der dem Überströmkanal gegenüberliegenden Schachtwand eingeführt.

Gemäß einer weiteren Ausführungsform sind in der Kühlgasleitung zumindest ein oder eine Mehrzahl von Regelorganen angeordnet sind, die derart ausgebildet sind, dass sie die Menge an Kühlluft von dem Kühlgasablass und/ oder zu dem Kühlgaseinlass steuern/regeln. Bei den Regelorganen handelt es sich beispielsweise um eine Klappe, einen Ventilator oder ein Ventil. Vorzugsweise ist eine Steuerungseinrichtung vorgesehen, die mit den Regelorganen verbunden und derart eingerichtet und ausgebildet ist, dass sie die Menge an über den Kühlgasablass abgeführten Kühlgas und/ oder die Menge an zu dem Kühllufteinlass strömenden Kühlgases steuert/ regelt, insbesondere in Abhängigkeit eines gewünschten Anteils an CO₂ im Abgas. Vorzugsweise sind die Regelorgane derart eingerichtet, dass ausschließlich dem Regenerativschacht, insbesondere der Vorwärmzone des Regenerativschachts, das Kühlgas über den Kühlgaseinlass zugeführt wird.

Gemäß einer weiteren Ausführungsform weist der Überströmkanal einen ersten Verbindungskanal und einen zweiten Verbindungskanal auf, die gasströmungstechnisch parallel zueinander angeordnet sind. Vorzugsweise sind die Verbindungskanäle separat zueinander angeordnet. Der erste Verbindungskanal ist beispielsweise oberhalb des zweiten Verbindungskanals angeordnet.

Gemäß einer weiteren Ausführungsform ist der erste Verbindungskanal derart angeordnet und ausgebildet, dass ausschließlich das Abgas der Brennzone in den ersten Verbindungskanal einströmbar ist. Gemäß einer weiteren Ausführungsform ist der zweite Verbindungskanal derart angeordnet und ausgebildet, dass ausschließlich das Kühlgas der Kühlzone in den zweiten Verbindungskanal einströmbar ist. Dadurch wird das Kühlgas des Brennschachtes unabhängig von den Verbrennungsgasen in den Regenerativschacht eingeführt und eine Vermischung der Verbrennungsgase mit den Kühlgasen innerhalb des Überströmkanals wird zuverlässig verhindert.

Der erste Verbindungskanal ist beispielsweise als direkter Verbindungskanal und der zweite Verbindungskanal als indirekter Verbindungskanal ausgebildet. Der GGR-Schachtofen weist beispielsweise einen als materialfreier Raum ausgebildeten Ringkanal auf, der vorzugsweise gastechnisch mit dem Überströmkanal, insbesondere dem ersten oder dem zweiten Verbindungskanal, verbunden ist.

Das über den Abgasauslass aus dem Schacht ausgelassene Abgas weist vorzugsweise einen CO₂-Gehalt von mindestens 70 Vol%, insbesondere mindestens 85 Vol%, vorzugsweise mindestens 90 bis 95 Vol% auf. Optional weist das Abgas, beispielsweise für die Soda oder Zuckerindustrie, einen CO₂-Gehalt von 35 bis 45 Vol% auf, wobei insbesondere keine Abgasrückführung in den Brennschacht erfolgt.

Die Erfindung umfasst auch ein Verfahren zum Brennen von Material, wie Karbonatgesteinen, in einem Gleichstrom-Gegenstrom-Regenerativ-Schachtofen, wobei die mit Bezug auf den Gleichstrom-Gegenstrom-Regenerativ-Schachtofen beschriebenen Ausführungen und Vorteile in verfahrensgemäßer Entsprechung auch auf das Verfahren zutreffen.

Bei einem Verfahren zum Brennen von Material, wie Karbonatgesteinen, in einem Gleichstrom-Gegenstrom-Regenerativ-Schachtofen mit zwei Schächten, die abwechselnd als Brennschacht und als Regenerativschacht betrieben werden und mittels eines Überströmkanals miteinander verbunden sind, strömt das Material durch einen Materialeinlass in eine Vorwärmzone zum Vorwärmen des Materials, eine Brennzone zum Brennen des Materials und eine Kühlzone zum Kühlen des Materials zu einem Materialauslass, wobei ein Kühlgas in die Kühlzone eingelassen wird, wobei Abgas über einen Abgasauslass aus einem der Schächte ausgelassen wird. Das Kühlgas wird aus der Kühlzone mittels einer Kühlgasleitung in die Vorwärmzone geleitet.

Das über den Abgasauslass aus dem Schacht ausgelassene Abgas wird vorzugsweise dem Brennschacht zugeführt. Beispielsweise wird das Abgas in die Vorwärmzone des als Brennschacht betriebenen Schachts eingeleitet.

Gemäß einer Ausführungsform wird das Kühlgas separat zu den Verbrennungsgasen der Brennzone in der Kühlgasleitung in die Vorwärmzone geleitet. Das Kühlgas wird vorzugsweise parallel zu den Verbrennungsgasen der Brennzone in die Vorwärmzone geleitet.

Gemäß einer weiteren Ausführungsform wird das Kühlgas vorzugsweise ausschließlich aus dem Regenerativschacht ausgelassen.

Gemäß einer weiteren Ausführungsform wird das Kühlgas aus der Kühlzone abgezogen und in die Vorwärmzone eingeleitet. Insbesondere wird das Kühlgas in den unteren, an die Brennzone angrenzenden Bereich der Vorwärmzone eingeleitet.

Gemäß einer weiteren Ausführungsform wird das über die Kühlgasleitung in die Vorwärmzone eingeleitete Kühlgas mittels eines Kühlgasauslasses aus der Vorwärmzone abgeführt. Insbesondere wird das Kühlgas über den am oberen Ende der Vorwärmzone angeordneten Kühlgasauslass aus dem Schacht abgeführt. Die Menge an über den Kühlgasauslass aus dem Regenerativschacht ausgelassenen Kühlgases wird vorzugsweise mittels eines Regelorgans eingestellt. Vorzugseise werden 85% bis 115%, insbesondere 90% bis 110%, vorzugsweise 105% der dem GGR-Schachtofen zugeführten Kühlgasmenge als Kühlgasabluft über den Kühlgasauslass abgeführt.

Mit dem vorangehend beschriebenen GGR-Schachtofen und dem Verfahren zum Betreiben des GGR-Schachtofens wird ein CO₂-Gehalt im Abgas von mindestens 30vol%, insbesondere mindestens 50Vol%, vorzugsweise mindestens 70vol% bis mindestens 90vol% erreicht. Dies ermöglicht eine Weiterverarbeitung des Abgases in anderen Industrieprozessen oder eine Speicherung des CO₂-haltigen Abgases.

### Beschreibung der Zeichnungen

Die Erfindung ist nachfolgend anhand mehrerer Ausführungsbeispiele mit Bezug auf die beiliegenden Figuren näher erläutert.
- Fig. 1: zeigt eine schematische Darstellung eines GGR-Schachtofens in einer Schnittansicht gemäß einem Ausführungsbeispiel.
- Fig. 2a,b: zeigt jeweils eine schematische Darstellung des Gasströmungsverlaufs eines GGR-Schachtofens in einer Längsschnittansicht gemäß einem weiteren Ausführungsbeispiel.
- Fig. 3: zeigt eine schematische Darstellung eines GGR-Schachtofens in einer Längsschnittansicht gemäß einem weiteren Ausführungsbeispiel.
- Fig. 4a: zeigt eine schematische Darstellung eines GGR-Schachtofens in einer Längsschnittansicht gemäß einem weiteren Ausführungsbeispiel.
- Fig. 4b: zeigt eine schematische Darstellung des Gasströmungsverlaufs eines GGR-Schachtofens in einer Querschnittansicht gemäß einem weiteren Ausführungsbeispiel.
- Fig. 5a: zeigt eine schematische Darstellung eines GGR-Schachtofens in einer Längsschnittansicht gemäß einem weiteren Ausführungsbeispiel.
- Fig. 5b: zeigt eine schematische Darstellung des Gasströmungsverlaufs eines GGR-Schachtofens in einer Querschnittansicht gemäß einem weiteren Ausführungsbeispiel.
- Fig. 6: zeigt eine schematische Darstellung eines GGR-Schachtofens in einer Längsschnittansicht gemäß einem weiteren Ausführungsbeispiel.

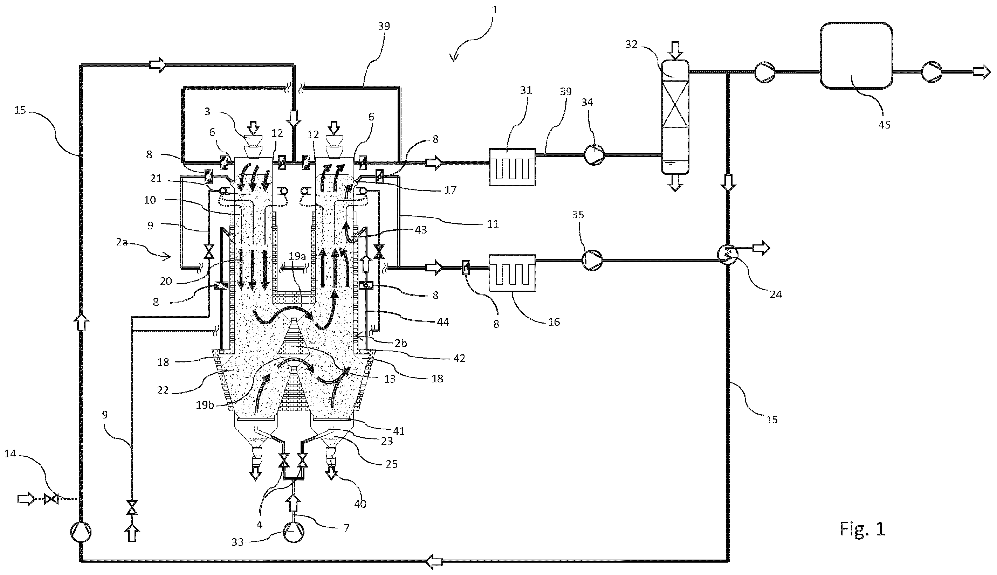

Fig. 1 zeigt einen GGR-Schachtofen 1 mit zwei parallelen und vertikal ausgerichteten Schächten 2. Die Schächte 2 des GGR-Schachtofens 1 sind im Wesentlichen identisch aufgebaut, sodass in Fig. 1 leidglich einer der beiden Schächte 2 vollständig mit Bezugszeichen versehen ist und im Folgenden der Einfachheit halber meist lediglich einer der beiden Schächte 2 beschrieben ist. Jeder Schacht 2 weist jeweils einen Materialeinlass 3 auf zum Einlassen von zu brennenden Material in den jeweiligen Schacht 2 des GGR-Schachtofens 1. Bei dem zu brennenden Material handelt es sich insbesondere um Kalkstein und/ oder Dolomitstein vorzugsweise mit einer Korngröße von 10 bis 200mm, vorzugsweise von 15 bis 120mm, höchstvorzugsweise 30 bis 100mm. Die Materialeinlässe 3 sind beispielhaft an dem oberen Ende des jeweiligen Schachts 2 angeordnet, sodass das Material durch den Materialeinlass 3 schwerkraftbedingt in den Schacht 2 fällt. Der Materialeinlass 3 ist beispielsweise als obere Öffnung des Schachts 2 und insbesondere als Schleuse 3 ausgebildet und erstreckt sich vorzugsweise über den gesamten oder einen Teil des Querschnitts des Schachts 2. Ein als Schleuse 3 ausgebildeter Materialeinlass ist vorzugsweise derart ausgestaltet, dass lediglich das zu brennende Rohmaterial in den Schacht 2 gelangt, nicht aber die Umgebungsluft. Vorzugsweise ist die Schleuse 3 derart ausgebildet, dass sie den Schacht 2 luftdicht gegen die Umgebung abdichtet und einen Eintritt von Feststoffen, wie das zu brennende Gut, in den Schacht erlaubt.

Jeder Schacht 2 weist an seinem oberen Ende des Weiteren einen Verbrennungsgaseinlass 12 zum Einlassen von Verbrennungsgas zur Verbrennung von Brennstoffen auf. Bei dem Verbrennungsgas handelt es sich beispielsweise um entstaubtes Abgas zumindest eines der Schächte 2, wobei das Abgas optional mit Sauerstoff angereichert ist. Des Weiteren weist jeder Schacht 2 einen Abgasauslass 6 zum Auslassen von Abgasen aus dem jeweiligen Schacht 2 auf. Jedem Abgasauslass 6 und Verbrennungsgaseinlass 12 ist beispielhaft jeweils ein Regelorgan zugeordnet. Über Regelorgane, wie beispielsweise eine Klappe, ein Ventil oder ein mengenregulierbarer Verdichter, ist vorzugsweise die Menge an Verbrennungsgas in den jeweiligen Verbrennungsgaseinlass 12 und die Menge an über den jeweiligen Abgasauslass 6 abzuziehendes Abgas einstellbar. Der Verbrennungsgaseinlass 12 und der Abgasauslass 6 sind beispielhaft auf dem gleichen Höhenniveau und insbesondere innerhalb der Vorwärmzone 21 des jeweiligen Schachts 2 angeordnet.

Am unteren Ende des Schachts 2 ist ein Materialauslass 40 zum Abführen des gebrannten Materials angeordnet. Bei dem Materialauslass 40 handelt es sich beispielsweise um eine wie mit Bezug auf den Materialeinlass 3 beschriebene Schleuse. Das gebrannte Material wird beispielsweise in einen Auslasstrichter 25 geleitet, an den sich der Materialauslass 40 des Schachts 2 anschließt. Der Auslasstrichter 25 ist beispielhaft trichterförmig ausgebildet. Der Auslasstrichter 25 weist vorzugsweise einen Kühlgaseinlass 23 zum Einlassen von Kühlgas in den jeweilige Schacht 2 auf. Das Kühlgas wird vorzugsweise mittels eines Verdichters 33 in den Kühlgaseinlass 23 geleitet.

Unterhalb des Materialeinlasses 3 und/ oder des Verbrennungsgaseinlasses 12 schließt sich in Strömungsrichtung des Materials die Vorwärmzone 21 des jeweilige Schachtes 2 an. In der Vorwärmzone 21 wird das Material und das Verbrennungsgas vorzugsweise auf etwa 700°C vorgewärmt. Vorzugsweise ist der jeweilige Schacht 2 mit zu brennendem Material gefüllt. Das Material wird vorzugsweise oberhalb der Vorwärmzone 21 in den jeweiligen Schacht 2 aufgegeben. Zumindest ein Teil der Vorwärmzone 21 und der sich in Strömungsrichtung des Materials daran anschließende Teil des jeweiligen Schachtes 2 sind beispielsweise mit einer feuerfesten Auskleidung umgeben.

In der Vorwärmzone 21 sind optional eine Mehrzahl von Brennerlanzen 10 angeordnet und dienen jeweils als Einlass für Brennstoff, wie beispielsweise ein Brenngas, Öl oder gemahlener fester Brennstoff. Vorzugsweise sind in jedem Schacht 2 eine Mehrzahl, beispielsweise zwölf oder mehr Brennerlanzen 10 und im Wesentlichen gleichmäßig zueinander beabstandet angeordnet. Die Brennerlanzen 10 weisen beispielsweise eine L-Form auf und erstrecken sich vorzugsweise in horizontaler Richtung in den jeweiligen Schacht 2 hinein und innerhalb des Schachtes 2 in vertikaler Richtung, insbesondere in Strömungsrichtung des Materials. Die Enden der Brennerlanzen 10 eines Schachtes 2 sind vorzugsweise alle auf demselben Höhenniveau angeordnet. Vorzugsweise ist die Ebene, an der die Lanzenenden angeordnet sind, jeweils das untere Ende der jeweiligen Vorwärmzone 21. Die Brennerlanzen 10 sind vorzugsweise mit einer Brennstoffleitung 9 zur Leitung von Brennstoff zu den Brennerlanzen 10 verbunden. Die Brennstoffleitung 9 ist beispielshaft zumindest teilweise als Ringleitung ausgebildet, die sich umfangsmäßig um den jeweiligen Schacht 2 herum erstreckt. Vorzugsweise weist jeder Schacht 2 eine jeweils den Brennerlanzen 10 des Schachts 2 zugeordnete Brennstoffleitung 9 auf, die insbesondere jeweils ein Regelorgan zur Einstellung der Brennstoffmenge zu den Brennerlanzen 10 aufweist.

An die Vorwärmzone 21 schließt sich in Strömungsrichtung des Materials die Brennzone 20 an. Die Brennerlanzen 10 münden beispielsweise in die Brennzone 20. Vorzugsweise erstreckt sich die Flamme der Brennerlanzen 10 in die Brennzone 20 hinein. In der Brennzone 20 wird der Brennstoff verbrannt und das vorgewärmte Material bei einer Temperatur von etwa 1000°C gebrannt. Die Verbrennung des Brennstoffs erfolgt beispielsweise mit einem Luftüberschuss relativ zu einer stöchiometrischen Verbrennung. Vorzugsweise erfolgt eine vollständige Verbrennung des Brennstoffs insbesondere ausschließlich innerhalb der Brennzone 20 des Brennschachts. Es ist ebenfalls denkbar, dass eine Nachverbrennung von innerhalb der Brennzone 20 nicht vollständig verbranntem Brennstoff in einem Überströmkanal und/ oder dem Regenerativschacht erfolgt.

Der GGR-Schachtofen 1 weist des Weiteren beispielhaft einen Überströmkanal 19 zum gastechnischen Verbinden der beiden Schächte 2 miteinander auf. Der Überströmkanal 19 umfasst beispielhaft zwei Verbindungskanäle 19a und 19b. Die Verbindungskanäle 19a und 19b sind beispielhaft parallel und separat zueinander angeordnet. Beispielhaft sind die Verbindungskanäle 19a und 19b durch ein insbesondere horizontales Trennelement 13, wie beispielsweise eine Trennwand, gastechnisch voneinander getrennt. Der Schachtofen 1 weist beispielhaft einen ersten Verbindungskanal 19a auf, der sich insbesondere direkt an die Brennzone 20 anschließt und vorzugsweise oberhalb eines zweiten Verbindungskanals 19b angeordnet ist. Der erste Verbindungskanal 19a ist beispielhaft derart angeordnet und ausgebildet, dass ausschließlich das Abgas der Brennzone 20 in diesen einströmbar ist. Optional ist der erste Verbindungskanal 19a und der zweite Verbindungskanal 19b jeweils als materialfreier Raum ausgebildet, in dem kein zu brennendes Material vorhanden ist. Der zweite Verbindungskanal 19b ist vorzugsweise unterhalb des ersten Verbindungskanals 19a angeordnet und insbesondere direkt strömungstechnisch mit der Kühlzone 22 verbunden. Der zweite Verbindungskanal 19b ist beispielhaft derart angeordnet und ausgebildet, dass ausschließlich das Kühlgas der Kühlzone 22 in den zweiten Verbindungskanal 19b einströmbar ist.

In der Fig. 1 ist beispielhaft ein GGR-Schachtofen 1 mit einem Überströmkanal 19, der beispielhaft einen ersten und einen zweiten Verbindungskanal 19a, b umfasst, gezeigt. Der Schachtofen 1 weist beispielsweise einen eckigen Schachtquerschnitt auf. Es ist ebenfalls denkbar, dass die Schächte 2 des GGR-Schachtofens 1 einen, dreieckigen, viereckigen, rechteckigen, runden, ovale, vieleckigen, halbreisförmigen, teilkreisförmigen oder kreisförmigen Querschnitt aufweisen. Der Überströmkanal 19 bildet beispielsweise eine gastechnische Verbindung der beiden Schächte 2 aus, wobei das Kühlgas des Brennschachts 2a, insbesondere getrennt von dem Brenngas des Brennschachts 2a in den Überströmkanal 19 und anschließend in den Regenerativschacht 2b strömt. Vorzugsweise ist der erste Verbindungskanal 19a als direkter Verbindungskanal 19a ausgebildet, wobei der zweite Verbindungskanal 19b beispielhaft ebenfalls als direkter Verbindungskanal 19b ausgebildet ist.

Die Brennzone 20 erstreckt sich beispielhaft in einem Schachtabschnitt mit einem im Wesentlichen konstanten Querschnitt. Der Schachtabschnitt erstreckt sich beispielhaft mit seinem unteren Bereich in den oberen Bereich der Kühlzone 22 hinein oder grenzt direkt an diesen an, sodass sich ein Ringkanal, insbesondere ein 18 zwischen der Brennzone 20 und der Kühlzone 22 ausbildet. Der Seitenkanal 18 bildet einen materialfreien Raum aus, in dem kein zu brennendes Material angeordnet ist. Der Seitenkanal 18 erstreckt sich vorzugsweise längs zur Schachtwand, die dem Verbindungskanal abgewandt ist, am unteren Bereich der Brennzone 20 und/ oder den oberen Bereich der Kühlzone 22.-Vorzugsweise ist der Seitenkanal 18 auf der Höhe des Überströmkanals 19 angeordnet.. Der Querschnitt des Schachtabschnitts der Kühlzone 22 ist beispielhaft größer als der Querschnitt des unteren Bereichs der Brennzone 20, sodass sich an dem oberen Ende der Kühlzone 22 und angrenzend an die Brennzone 20 der materialfreie Raum 18, insbesondere als Seitenkanal ausbildet, in dem kein Material angeordnet ist.

Es ist ebenfalls denkbar, dass die Brennzone 20 und die Vorwärmzone 21 der Schächte 2a, b einen über die Schachtlänge im Wesentlichen konstanten Querschnitt aufweisen. Die radial nach außen von dem Überströmkanal weg weisende Außenwand der Schächte 2 erstreckt sich insbesondere ausschließlich vertikal über die gesamte Schachtlänge, insbesondere über die Länge der Brennzone 20 und der Kühlzone 22. Die Kühlzone 22 weist vorzugsweis einen sich in Richtung des Verbindungskanals 19 vergrößernden Querschnitt auf, der in den Verbindungskanal 19 mündet. Optional sind die Schächte 2 des GGR-Schachtofens 1 vollständig mit Material gefüllt, sodass insbesondere in der Brennzone 20 und der Kühlzone 22, kein materialfreier Raum ausgebildet ist.

An die Brennzone 20 schließt sich in Strömungsrichtung des Materials in jedem Schacht 2 die Kühlzone 22 an, die sich bis zum Materialauslass 40 erstreckt. Die Kühlzone 22 ist beispielhaft in einem Schachtabschnitt mit einem im Wesentlichen konstanten oder nach unten geringer werdendem Querschnitt ausgebildet. Das Material wird innerhalb der Kühlzone 22 auf etwa 100°C bis 250°C im Gegenstrom zu dem Material strömendem Kühlgas abgekühlt.

Das über den Kühlgaseinlass 23 in die Kühlzone 22 strömende Kühlgas strömt vorzugsweise vollständig zu einem Kühlgasablass 42, der vorzugsweise als Öffnung in der Schachtwand oder als Seitenkanal ausgebildet ist. Aus dem Kühlgasablass 42 strömt das Kühlgas insbesondere vollständig aus dem jeweiligen Schacht 2, vorzugsweise ausschließlich aus der Kühlzone 22 des Schachts 2 heraus. Der Kühlgasablass 42 ist beispielhaft mit einer Kühlgasleitung 44 verbunden, die außerhalb des Schachts 2 angeordnet ist. Der Kühlgasablass 42 ist insbesondere über die Kühlgasleitung 44 mit einem Kühlgaseinlass 43 zum Einlassen des Kühlgases in den Schacht 2 verbunden. Der Kühlgasablass 42 ist vorzugsweise vollständig in der Kühlzone 22, insbesondere in dem materialfreien Seitenkanal 18, angeordnet, wobei der Kühlgaseinlass 43 innerhalb der Vorwärmzone 21, insbesondere am unteren Ende der Vorwärmzone 21, des jeweilige Schachts 2a,b angeordnet ist. Vorzugsweise weist jeder Schacht 2, der Brennschacht und der Regenerativschacht, jeweils einen Kühlgasablass 42 und jeweils einen Kühlgaseinlass 43 auf, die miteinander über die Kühlgasleitung 44 zum Leiten des Kühlgases von dem Kühlgasablass 42 zu dem Kühlgaseinlass 43 verbunden sind.

In dem Ausführungsbeispiel der Fig. 1 wird das über den Kühlgasablass 42 aus der Kühlzone 22 abgeführte Kühlgas über eine als Bypass zu der Brennzone 21 ausgebildete Kühlgasleitung 44 dem Kühlgaseinlass 43, insbesondere der Vorwärmzone 21 zugeführt. Der Kühlgaseinlass 43 ist vorzugsweise in der Vorwärmzone 21 angeordnet und insbesondere als Öffnung in der Schachtwand der Vorwärmzone 21 ausgebildet. Der Kühlgaseinlass 43 ist beispielsweise als Schlitz in der Schachtwand ausgebildet, der sich insbesondere horizontal erstreckt. Die Kühlgasleitung 44 weist ein Regelorgan 8, wie beispielsweis eine Klappe oder ein Ventil, auf, das beispielsweise derart ausgebildet ist, dass die Menge an über den Kühlgasablass 42 abzuführendem Kühlgas einstellbar ist. Vorzugsweise ist das Regelorgan 8 derart eingestellt, dass die gesamte Menge an Kühlgas aus der Kühlzone über den Kühlgasablass 42 abgeführt und dem Kühlgaseinlass 43 wieder zugeführt wird.

Der GGR-Schachtofen 1 weist vorzugsweise einen Kühlgasauslass 17 zum Auslassen von Kühlgas aus dem Schacht 2, insbesondere aus dem Regenerativschacht 2b auf. Der Kühlgasauslass 17 ist beispielhaft in der Vorwärmzone 21 des GGR-Schachtofens 1, insbesondere des Regenerativschachts 2b und/ oder des Brennschachts 2a, angeordnet. Vorzugsweise weist jeder Schacht 2 einen Kühlgasauslass 17 auf. Insbesondere ist der Kühlgasauslass 17 in der Außenwand des Schachts 2, vorzugsweise in der Außenwand der Vorwärmzone 21 oder der Brennzone 20, angeordnet und erstreckt sich vollständig durch diese hindurch aus dem jeweiligen Schacht 2 heraus. Der Kühlgasauslass 17 ist vorzugsweise vollständig innerhalb der Vorwärmzone 21 angeordnet, sodass das Kühlgas durch den Kühlgasauslass 17 aus der Vorwärmzone 21 und dem Schacht 2 heraus geleitet wird. Der Kühlgasauslass 17 ist vorzugsweise gastechnisch mit der Vorwärmzone 21 verbunden, sodass das Kühlgas vorzugsweise durch die Vorwärmzone 21 und anschließend durch den Kühlgasauslass 17 strömbar ist. Vorzugsweise ist der Kühlgasauslass 17 in einem Bereich der Außenwand der Vorwärmzone 21 angeordnet, der dem Überströmkanal 19 abgewandt ist. Der Kühlgasauslass 17 ist vorzugsweise in der dem Überströmkanal 19 gegenüberliegenden Außenwand des Schachts 2, insbesondere des Regenerativschachts 2b angeordnet.

An dem materialauslassseitigen Ende eines jeden Schachtes 2 ist vorzugsweise eine Austragseinrichtung 41 angeordnet. Die Austragseinrichtungen 41 umfassen beispielsweise horizontale Platten, vorzugsweise einen Austragstisch, die einen seitlichen Durchtritt des Materials zwischen dem Austragstisch und der Gehäusewand des GGR-Schachtofens erlauben. Die Austragseinrichtung 41 ist vorzugsweise als Schub- oder Drehtisch oder als Tisch mit Schubräumer ausgeführt. Dies ermöglicht eine gleichmäßige Durchsatzgeschwindigkeit des Brennguts durch die Schächte 2. Die Austragseinrichtung 41 umfasst des Weiteren beispielhaft den Auslasstrichter 25, der sich an den Austragstisch anschließt und an dessen unterem Ende der Materialauslass 40 angebracht ist.

Im Betrieb des GGR-Schachtofens 1 strömt das zu brennende Material von oben nach unten durch den jeweiligen Schacht 2, wobei die Kühlluft von unten nach oben, im Gegenstrom zu dem Material, durch den jeweiligen Schacht 2 strömt. Das Ofenabgas wird durch den Abgasauslass 6 aus dem Schacht 2 abgeführt. Im Betrieb des GGR-Schachtofens 1 ist jeweils einer der Schächte 2 aktiv, wobei der jeweils andere Schacht 2 passiv ist. Der aktive Schacht 2a wird als Brennschacht und der passive Schacht 2 als Regenerativschacht 2b bezeichnet. Der GGR-Schachtofen 1 wird insbesondere zyklisch betrieben, wobei eine übliche Zykluszahl beispielsweise 75 bis 150 Zyklen pro Tag beträgt. Nach Ablauf der Zykluszeit wird die Funktion der Schächte 2 getauscht. Dieser Vorgang wiederholt sich fortlaufend. Über die Materialeinlässe 3 wird abwechselnd Material wie Kalk- oder Dolomitstein in die Schächte 2 aufgegeben. In dem als Brennschacht 2a betriebenen, aktiven Schacht 2 wird über die Brennerlanzen 10 ein Brennstoff in den Brennschacht 2 eingeleitet. Das zu brennende Material wird in der Vorwärmzone 21 des Brennschachts 2a vorzugsweise auf eine Temperatur von etwa 700°C erwärmt. In dem Ausführungsbeispiel der Fig. 1 wird der linke Schacht 2 als Brennschacht 2a betrieben, wobei der rechte Schacht 2 als Regenerativschacht 2b betrieben wird.

Im Betrieb des GGR-Schachtofens 1 strömt sowohl in dem Brennschacht 2a als auch in dem Regenerativschacht 2b das Kühlgas im Gegenstrom zu dem zu kühlenden Material durch die Kühlzone 22 und wird vorzugsweise vollständig in die separat zu der Brennzone angeordnete Kühlgasleitung 44 geleitet.

Innerhalb des als Brennschacht 2a betriebenen Schachts 2 strömt das Verbrennungsgas durch den Verbrennungsgaseinlass 12 in den Brennschacht und im Gleichstrom mit dem Material innerhalb der Brennzone 20 in den Überströmkanal 19 und anschließend in den als Regenerativschacht 2b betriebenen Schacht 2. Innerhalb des Regenerativschachts 2b strömt das Gas von dem Verbindungskanal 19 im Gegenstrom zu dem zu brennenden Material durch die Brennzone 20 in die Vorwärmzone 21 und verlässt den Regenerativschacht 2b durch den Abgasauslass 6 des Regenerativschachts 2b. Vorzugsweise weist das aus dem Schacht 2 ausgelassene Abgas eine Temperatur von 60°C bis 160°C, vorzugsweise 100°C auf.

Das Abgas wird in eine sich an den Abgasauslass 6 anschließende Abgasleitung 39 geleitet. Die Abgasleitung 39 weist in Strömungsrichtung des Abgases im Anschluss an den Abgasauslass 6 optional einen Abgasfilter 31 zum Filtern von feinen Partikeln, insbesondere Staub, aus dem Abgas auf. Der GGR-Schachtofen 1 weist vorzugsweise eine Mehrzahl von Regelorganen auf, wobei insbesondere jeweils ein Regelorgan jeweils einem Abgasauslass 6 oder Verbrennungsgaseinlass 12 zugeordnet ist zur Regelung der Strömung zu oder von dem Abgasauslass 6 und dem Verbrennungsgaseinlass 12. Bei dem Regelorgan handelt es sich beispielsweise um eine Drosselklappe oder einen Verdichter. Der Verbrennungsgaseinlass 12 ist vorzugsweise mit einem vorgeschalteten Regelorgan verbunden, sodass vorzugsweise lediglich dem Verbrennungsgaseinlass 12 des als Brennschacht 2a betriebenen Schachts 2 das Verbrennungsgas, insbesondere das Oxidationsmittel zusammen mit dem rückgeführten Abgas zugeführt wird.

Die Abgasleitung 39 weist beispielhaft stromabwärts des Abgasfilters 31 einen Verdichter 34 und eine Kühleinrichtung 32 auf. Im Anschluss an die Kühleinrichtung 32 wird das Abgas vorzugsweise abgeführt. Vorzugsweise wird gesamte CO₂-Menge aus der Kalzinierung und der Verbrennung sowie das Wasser aus der Verbrennung aus dem GGR-Schachtofen 1 abgeführt. Die Kühleinrichtung 32 ist beispielsweise ein Wärmetauscher, der vorzugsweise mit einem Kühlmittel, wie Wasser, im Gegenstrom betrieben wird. Beispielsweise handelt es sich bei der Kühleinrichtung 32 um einen Rieselkühler. Der GGR-Schachtofen 1 weist eine Abgasrückführungsleitung 15 auf, die von der Abgasleitung 39 abzweigt und einen Teil des Abgases dem Verbrennungsgaseinlass 12 des Schachts 2, insbesondere des Brennschachts 2a, zuführt. Die Abgasrückführungsleitung 15 ist vorzugsweise mit dem Verbrennungsgaseinlass 12 verbunden und zweigt insbesondere stromabwärts der Kühleinrichtung 32 von der Abgasleitung 39 ab. Das nicht über die Abgasrückführungsleitung 15 dem Verbrennungsgaseinlass 12 zugeführte Abgas wird vorzugsweise aus dem GGR-Schachtofen 1 abgeführt. Die Abgasrückführungsleitung 15 ist beispielhaft mit einer Oxidationsmittelleitung 14 zur Leitung eines Oxidationsmittels in die Abgasrückführungsleitung 15 verbunden. Bei dem Oxidationsmittel handelt es sich vorzugsweise um Luft oder reinen Sauerstoff. Beispielsweise handelt es sich bei dem Oxidationsmittel um ein sauerstoffreiches Gas mit einem Sauerstoffanteil von mindestens 30vol%, insbesondere mindestens 50vol% oder 60vol%, vorzugsweise 70vol% bis 100vol%, vorzugsweise 92vol%. Die Oxidationsmittelleitung 14 ist vorzugsweise mit einer Oxidationsmittelquelle verbunden und weist vorzugsweise ein Regelorgan zur Einstellung der Menge an Oxidationsmittel in die Abgasrückführungsleitung 15 auf.

Der GGR-Schachtofen 1 weist vorzugswies einen Puffertank 45, dem das nicht über die Abgasrückführungsleitung 15 rezirkulierte Abgas vorzugsweise zugeführt wird. Der Puffertank 45 ist derart ausgebildet, dass er eine bestimmte Mange an Abgas zwischenspeichert bevor dies beispielsweise zur Weiterverarbeitung aus dem Puffertank 45 abgezogen wird. Beispielhaft sind in Strömungsrichtung des Abgases vor und nach dem Puffertank jeweils zumindest ein Ventilator angeordnet.

Fig. 1 zeigt zusätzlich die Gasströmung innerhalb des GGR-Ofens 1, wobei das CO₂-haltige Verbrennungsgas mit den schwarz ausgefüllten Pfeilen und das sauerstoffhaltige Kühlgas mit den weiß ausgefüllten Pfeilen dargestellt ist. Gemäß einer Erkenntnis der Erfinder, strömt das sauerstoffhaltige Kühlgas in dem Regenerativschacht 2b und/ oder dem Brennschacht 2a entlang der dem Überströmkanal 19 gegenüberliegenden Außenwand des Regenerativschachts 2b in die Vorwärmzone 21. Vorzugsweise strömt das sauerstoffhaltige Kühlgas im Wesentlichen separat zu dem Verbrennungsgas innerhalb der Schächte 2, sodass es nur zu einer sehr geringen Vermischung der Gasströme des Verbrennungsgases und des Kühlgases kommt. Eine Rückführung des abgezogenen Kühlgases in die Vorwärmzone bietet den Vorteil, dass die Wärmemenge des Kühlgases dem GGR-Schachtofen 1 zusätzlich in der der Vorwärmzone 21 zur Erwärmung des Materials zur Verfügung steht. In dem erfindungsgemäßen GGR-Schachtofen 1 strömt die Kühlluft vorzugsweise durch einen Großteil, insbesondere fast die gesamte Höhe, des Materialbetts der Vorwärmzone und weist eine vergleichsweise niedrige Auslasstemperatur auf. Dies führt zu einer optimalen Wärmebilanz, wobei keine zusätzliche Bauhöhe des GGR-Schachtofens 1 erforderlich ist. Des Weiteren kann auf einen dem Kühlgasauslass nachgeschalteten Rekuperator zur Nutzung der Abwärme verzichtet werden.

Der Kühlgasauslass 17 ist vorzugsweise in Gasströmungsrichtung des Regenerativschachts 2b stromabwärts der Enden, insbesondere Brennstoffauslässe, der Brennerlanzen 10 angeordnet. Vorzugsweise ist der Kühlgasauslass 17 in Materialströmungsrichtung stromabwärts des Abgasauslasses 6 angeordnet.

Der Kühlgasauslass 17 ist beispielsweise schlitzförmig ausgebildet. Insbesondere erstreckt sich der Kühlgasauslass 17 in horizontaler Richtung vorzugsweise über die gesamte Breite der Schachtaußenwand. Es ist ebenfalls denkbar, dass der Kühlgasauslass 17 eine Mehrzahl von sich durch die Außenwand des Schachts 2, insbesondere der Vorwärmzone 21, erstreckende Öffnungen aufweist, die beispielsweise horizontal nebeneinander über die gesamte Breite der Außenwand des Schachts 2 angeordnet und vorzugsweise gleichmäßig zueinander beabstandet sind.

Die Brennerlanzen 10 weisen beispielsweise in Fig. 1 nicht dargestellte Abdeckungen auf, die in Strömungsrichtung des Materials stromaufwärts der Einlässe der Brennerlanzen 10 in den jeweiligen Schacht 2 angeordnet sind. Die Abdeckungen sind derart ausgebildet und angeordnet, dass sie zumindest den oberen Bereich der Brennerlanzen 10 jeweils vor einem Kontakt, insbesondere Aufprallen des Materials auf die Brennerlanzen 10 schützen. Der Kühlgasauslass 17 ist oberhalb oder unterhalb der Abdeckung, angeordnet. Der Schacht 2 weist vorzugsweise eine Ausmauerung auf, die insbesondere eine feuerfeste Auskleidung umfasst. Der Kühlgasauslass 17 ist vorzugsweise an dem oberen Endbereich der Ausmauerung angeordnet.

Der GGR-Schachtofen 1 weist vorzugsweis eine Kühlgasabzugsleitung 11 auf, die mit dem Kühlgasauslass 17 zum Leiten der Kühlluft aus dem Schacht 2 heraus verbunden ist. Die Kühlgasabzugsleitung 11 ist außerhalb des Schachts 2 angeordnet und mit einem Filter 16 verbunden. Bei dem Filter 16 handelt es sich vorzugsweise um einen Partikelfilter, insbesondere Staubfilter. Die über den Kühlluftauslass 17 abgezogene Kühlluft weist vorzugweise eine Temperatur von 100°C bis 300°C°C auf. Beispielhaft umfasst die Kühlluftabzugsleitung 11 des GGR-Schachtofens 1 ein Regelorgan 8, wie beispielsweise eine Klappe oder ein Ventil zum Einstellen der Menge an Kühlluft, die aus der Vorwärmzone 21 über den Kühlgasauslass abgezogen wird. Beispielhaft wird der Kühlgasabzugsleitung 11 Luft über einen Verdichter oder Ventilator zugeführt. Beispielsweise umfasst die Kühlgasabzugsleitung 11 zumindest zwei Regelorgane, wobei jedes Regelorgan 8 zur Einstellung der jeweiligen Kühlgasmenge jeweils einem Kühlgasauslass 17 zugeordnet ist. Vorzugsweise ist ausschließlich das dem als Regenerativschacht 2b betriebenen Schachts 2 zugeordnete Regelorgan 8 geöffnet, wobei das dem Brennschacht 2a zugeordnete Regelorgan 8 geschlossen ist. Stromabwärts des Filters 16 wird das Kühlgas vorzugsweise aus dem GGR-Schachtofen 1 abgeführt. Es ist ebenfalls denkbar, dass die Kühlgasabzugsleitung 11 mit der Oxidationsmittelleitung 14, insbesondere dem Verbrennungsgaseinlass 12 verbunden ist, sodass die abgezogene Kühlluft dem Brennschacht 2a als Verbrennungsgas zugeführt wird. Vorteilhafterweise wird bei einer solchen Verschaltung kein CO₂ über den Kühlgasauslass 17 in die Atmosphäre entlassen sondern das gesamte Kühlgas wird zusammen mit dem Abgas abgeführt und anschließend vorzugsweise nachbehandelt oder gespeichert.

Der GGR-Schachtofen 1 weist optional einen Wärmtauscher 24 auf, der mit der Abgasrückführungsleitung 15 und der Kühlluftabzugsleitung 11 verbunden ist. Der GGR-Schachtofen 1 der Fig. 1 weist vorzugsweise ein Abgas mit einem CO₂-Gehalt von mehr als 70vol%, insbesondere mehr als 75vol%, insbesondere mehr als 90vol% auf. Bei einem solchen Prozessabgas ist es mit geringerem Aufwand möglich, dieses zu verflüssigen und zu sequestrieren. Beispielsweise wird das verflüssigte Prozessabgas weiteren Verfahrensschritten zugeführt oder gelagert. Alternativ kann mit dem vorangehend beschriebenen GGR-Schachtofen auch Abgas mit weniger CO₂-Gehalt, beispielsweise 45% für die Sodaherstellung oder 30% für die Herstellung Rübenzucker oder gefälltem Kalziumkarbonat, erzeugt werden.

Vorzugsweise weist jeder Schacht 2 einen in der Kühlzone 22 angeordneten Kühlgaseinlass 23 auf, der insbesondere mit einer Kühlgaszufuhrleitung 7 verbunden ist. Jedem Kühlgaseinlass 23 ist beispielhaft jeweils ein Regelorgan 4, wie eine Klappe oder ein Ventil, zugeordnet, das mit der Kühlgaszufuhrleitung 7 zur Einstellung der Menge an dem jeweiligen Kühlgaseinlass 23 zugeführtem Kühlgas verbunden ist. Vorzugsweise sind die Regelorgane 4 und/ oder ein Verdichter 33 derart eingestellt, dass dem Brennschacht 2a eine größere Kühlluftmange zugeführt wird als dem Regenerativschacht 2b. Vorzugsweise wird dem Brennschacht 2a etwa 20% bis 100%, vorzugsweise 90% der dem GGR-Schachtofen 1 zugeführten Gesamtkühlgasmenge zugeführt.

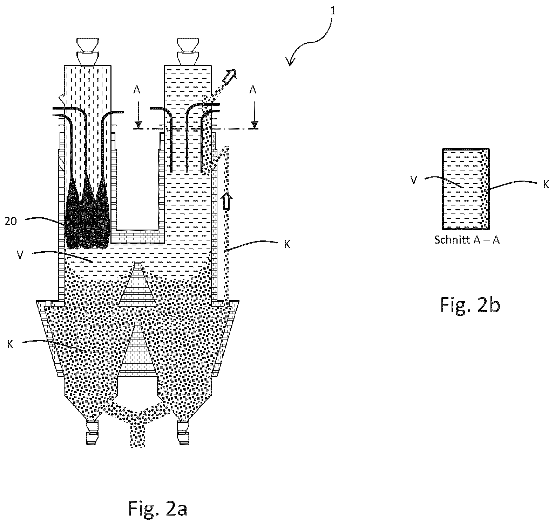

Fig. 2a zeigt den GGR-Schachtofen der Fig. 1 und Fig. 2b zeigt einen Schnitt A-A des GGR-Schachtofens 1 der Fig. 2a, wobei die Gasströmungen der Kühlluft K und der Verbrennungsgase V dargestellt ist. Der GGR-Schachtofen 1 der Fig. 2a weist den vorangehend beschriebenen Überströmkanal 19 mit einem direkten Verbindungskanal 19a für das Verbrennungsgas und einem direkten Verbindungskanal 19b für das Kühlgas auf, sodass die Kühlluft in dem Regenerativschacht 2b entlang der dem Überströmkanal 19 gegenüberliegenden Seitenkanal durch die Vorwärmzone 21 des Regenerativschachts 2b strömt. Fig. 2b zeigen einen Querschnitt durch die Vorwärmzone 21, wobei das Kühlgas ausschließlich an der dem Überströmkanal 19 abgewandten Schachtwand entlang strömt.

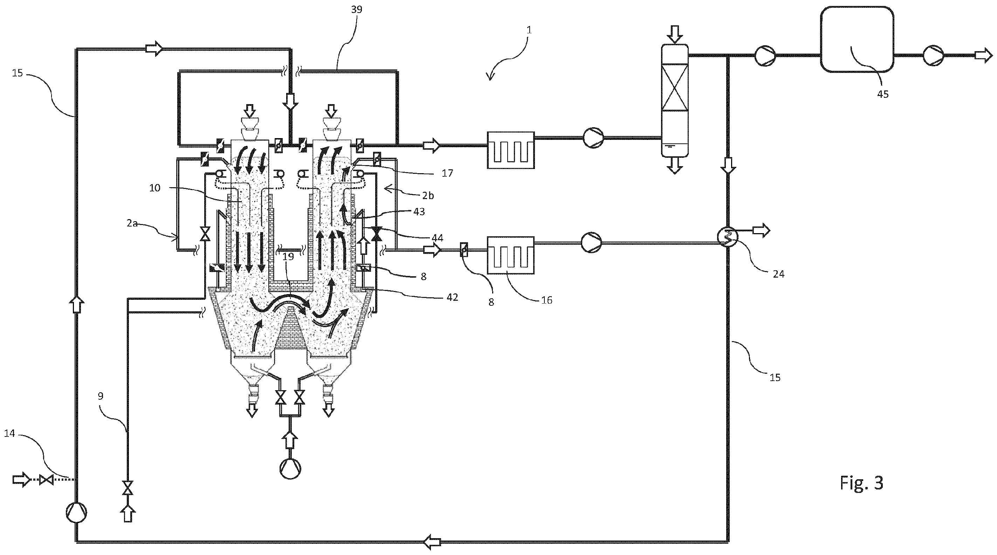

Fig. 3 zeigt ein weiteres Ausführungsbeispiel eines GGR-Schachtofens, der größtenteils dem der Fig. 1 und 2 entspricht mit dem Unterschied, dass der Überströmkanal 19 lediglich als einfacher Verbindungskanal ausgebildet ist, in dem das Abgas der Brennzone, insbesondere das Verbrennungsgas, und das Kühlgas gemeinsam geführt wird.

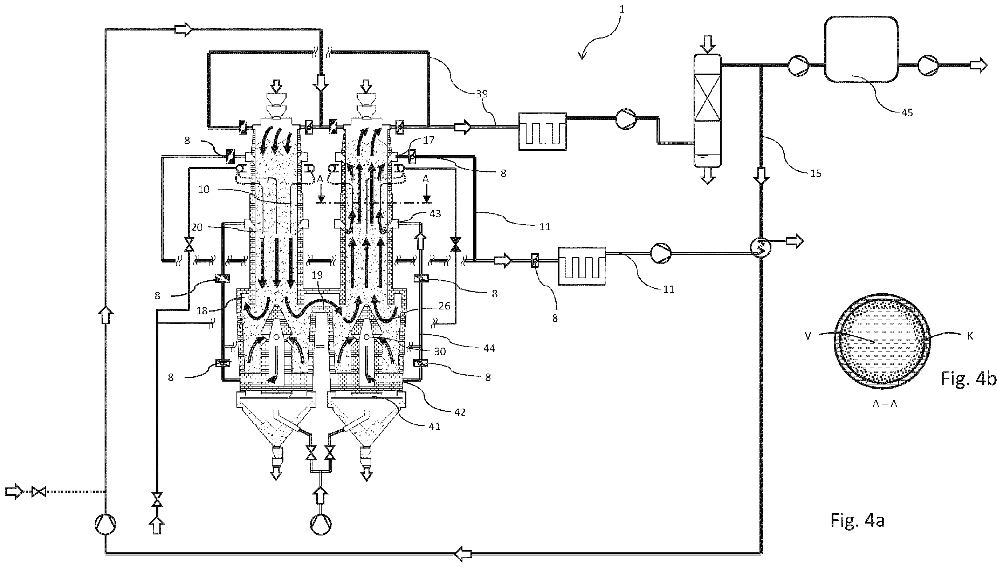

Fig. 4a und b zeigen ein weiteres Ausführungsbeispiel eines GGR-Schachtofens, der zu einem Großteil dem der Fig. 1 und 2 entspricht und wobei gleiche Elemente mit gleichen Bezugszeichen versehen sind. Der GGR-Schachtofen 1 der Fig. 4 weist beispielhaft Schächte 2 mit jeweils einem runden, insbesondere kreisförmigen, Querschnitt auf. Der GGR-Schachtofen 1 der Fig. 4 weist eine Kühlgasabzugseinrichtung auf, die einen Innenzylinder 26 umfasst, der sich von der Kühlzone 22 zumindest teilweise in die Brennzone 20 erstreckt und einen Kühlgasablass 42 aufweist, der mit der Kühlgasleitung 44 verbunden ist. Die Kühlzone 22 ist beispielhaft in einem Schachtabschnitt ausgebildet, der einen in etwa konstanten Querschnitt aufweist. Der materialfreie Ringraum des GGR-Schachtofens der Fig. 1, ist in dem Ausführungsbeispiel der Fig. 4a ebenfalls ausgebildet. Jeder Schacht 2 des GGR-Schachtofens 1 der Fig. 4a weist einen Innenzylinder 26 auf, der sich mittig in vertikaler Richtung durch die Kühlzone 22 erstreckt. Beispielhaft erstreckt sich der Innenzylinder 26 von der Austragseinrichtung 41 durch die Kühlzone 22 in die Brennzone 20 bis auf die Höhe des Überströmkanal 19.

Der Innenzylinder 26 der Kühlgasabzugseinrichtung weist einen Kühlgasablass 42 auf, der sich von dem Innenzylinder 26 radial nach außen durch die Schachtwand erstreckt und der Leitung von Kühlgas aus dem Innenzylinder in die Kühlgasleitung 44 dient. Der Innenzylinder 26 weist des Weiteren einen Kühlgaseinlass 30 zum Einlassen von Kühlgas aus der Kühlzone 22 in den Innenzylinder 26 auf. Der Kühlgaseinlass 30 erstreckt sich durch die Innenzylinderwand in die Kühlzone 22 und verbindet das Innere des Innenzylinders 26 mit der Kühlzone 22. Der Kühlgaseinlass 30 ist vorzugsweise oberhalb des Kühlgasablasses 42 in der Kühlzone 22 angeordnet. Das Kühlgas strömt im Betrieb des GGR-Schachtofens 1 von unten nach oben durch die Kühlzone 22 und in den Kühlgaseinlass 30 in den Innenzylinder 26 der Kühlgasabzugseinrichtung. Vorzugsweise strömt das gesamte in die Kühlzone 22 eingeleitete Kühlgas durch die Kühlgaseinlässe 30 in die Kühlgasabzugseinrichtung, sodass kein Kühlgas in die Brennzone 20 gelangt. Der Kühlluftablass 42 des Innenzylinders 26 ist vorzugsweise im unteren Bereich der Kühlzone 22 angeordnet. Das Kühlgas strömt insbesondere von dem Kühlgaseinlass 30 in dem Innenzylinder 26 nach unten zu dem Kühlgasablass 42. Die Kühlgasleitung 44 umfasst beispielhaft zumindest oder genau zwei Regelorgane 8. Vorzugsweise ist jeweils ein Regelorgan 8 dem jeweiligen Kühlgasablass 42 nachgeschaltet und derart ausgebildet und eingerichtet, dass die Menge an durch den Kühlgasablass 42 strömendes Kühlgas über das Regelorgan 8 einstellbar ist. Ein weiteres Regelorgan 8 ist vorzugsweise jeweils dem Kühlgaseinlass 43 vorgeschaltet und derart ausgebildet und eingerichtet, dass die Menge an in den Kühlgaseinlass 43 strömendes Kühlgas über das Regelorgan 8 einstellbar ist. Der Kühlgaseinlass 43 und/ oder der Kühlgasauslass 17 sind beispielsweise jeweils als Schlitz ausgebildet, der sich vorzugsweise über den gesamten Umfang der Vorwärmzone 21 erstreckt.

Die Leitung des aus der Kühlzone 22 und der Vorwärmzone 21 abgezogenen Kühlgases und des aus der Vorwärmzone 21 abgezogenen Abgases entsprechen in dem Ausführungsbeispiel der Fig. 1, 2 und 3 beschriebenen Verschaltung. Fig. 4b zeigt einen Querschnitt durch die Vorwärmzone des Regenerativschachts 2b, wobei das Verbrennungsgas V, insbesondere das Abgas der Brennzone 20, und das Kühlgas K dargestellt ist. Das Kühlgas K strömt nach einer Erkenntnis der Erfinder ausschließlich in dem radial äußeren, wandnahen Bereich des Schachts 2 durch die Vorwärmzone.

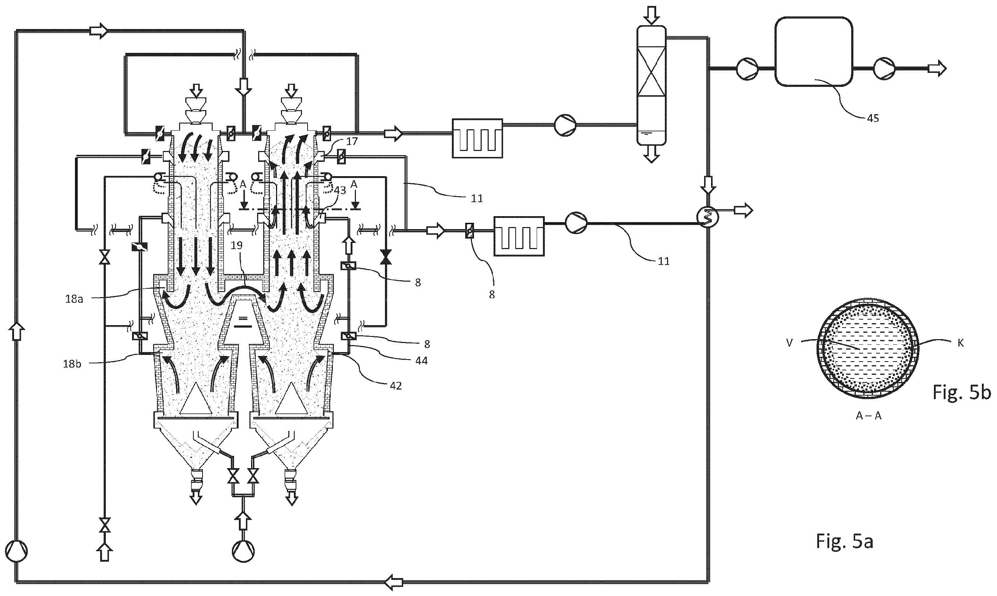

Fig. 5a und b zeigen ein weiteres Ausführungsbeispiel eines GGR-Schachtofens, der zu einem Großteil dem der Fig. 1, 2, 3 oder 4 entspricht und wobei gleiche Elemente mit gleichen Bezugszeichen versehen sind. Der GGR-Schachtofen der Fig. 5a weist ebenfalls einen runden, insbesondere einen kreisförmigen Querschnitt auf. Analog zu der Fig. 3 und 4 weist der Schachtofen der Fig. 5a ebenfalls einen Überströmkanal 19 auf, der als singulärer Verbindungskanal 19 ausgebildet ist. Die Brennzone 20 erstreckt sich beispielhaft in einem ersten und einem zweiten Schachtabschnitt, wobei der erste Schachtabschnitt einen im Wesentlichen konstanten oder nach unten geringfügig grösser werdenden Querschnitt aufweist. An den ersten Schachtabschnitt schließt sich in Strömungsrichtung des Materials ein zweiter Schachtabschnitt an, der einen sich in Strömungsrichtung des Materials verringernden Schachtquerschnitt aufweist. Der erste Schachtabschnitt erstreckt sich mit seinem unteren Bereich in den oberen Bereich des zweiten Schachtabschnitts hinein, sodass sich ein erster materialfreier Ringkanal 18a zwischen den beiden Schachtabschnitten ausbildet. Der zweite Schachtabschnitt weist in seinem oberen Bereich einen größeren Querschnitt als der erste Schachtabschnitt auf, wobei sich der Querschnitt des zweiten Schachtabschnitts in Strömungsrichtung des Materials auf den Querschnitt des ersten Schachtabschnitts reduziert und vorzugsweise das untere Ende der Brennzone 20 ausbildet. Die Kühlzone 22 weist vorzugsweise einen weiteren, zweiten materialfreien Ringraum 18b auf, wobei ein erster Ringraum 18a auf der Höhe des Überströmkanals 19 und ein zweiter Ringraum 18b unterhalb des Überströmkanal 19 angeordnet ist. Der Kühlgasablass 42 ist beispielhaft in dem zweiten Ringkanal 18b angeordnet und mit der Kühlgasleitung 44 verbunden.

Fig. 5b zeigt einen Querschnitt durch die Vorwärmzone des Regenerativschachts 2b, wobei das Verbrennungsgas V, insbesondere das Abgas der Brennzone 20, und das Kühlgas K dargestellt ist. Das Kühlgas K strömt nach einer Erkenntnis der Erfinder ausschließlich in dem radial äußeren, wandnahen Bereich des Schachts 2 durch die Vorwärmzone 21. Die Leitung des aus der Kühlzone 22 und der Vorwärmzone 21 abgezogenen Kühlgases und des aus der Vorwärmzone 21 abgezogenen Abgases entsprechen in dem Ausführungsbeispiel der Fig. 1, 2, 3 und 4 beschriebenen Verschaltung.

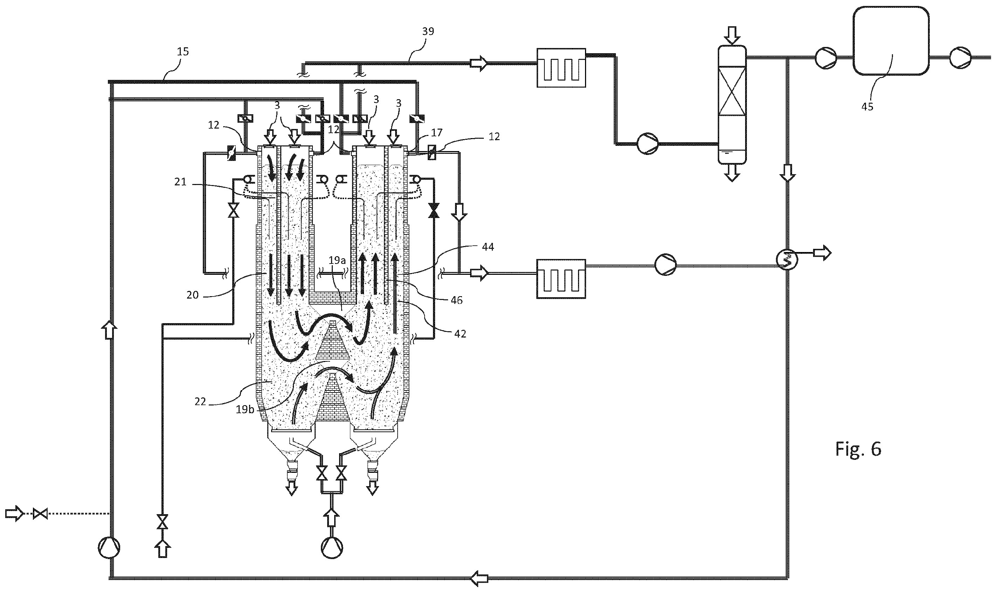

Fig. 6 zeigt ein weiteres Ausführungsbeispiel eines GGR-Schachtofens, der zu einem Großteil dem der Fig. 1 bis 5 entspricht und wobei gleiche Elemente mit gleichen Bezugszeichen versehen sind. Der Überströmkanal 19 umfasst zwei parallele, direkte Verbindungskanäle 19a, und 19b Im Unterschied zu den vorangehend beschriebenen GGR-Schachtöfen 1 weist der GGR-Schachtofen 1 der Fig. 6 eine Kühlgasleitung 44 auf, die innerhalb des Schachts 2 angeordnet ist. Der GGR-Schachtofen 1 weist in jedem Schacht 2 jeweils eine Trennwand 46 auf, durch welche die Kühlgasleitung 44 gastechnisch abgetrennt ist. Die Trennwand 46 erstreckt sich vorzugsweise vertikal, von der Brennzone 20 bis zur Schachtdecke. Insbesondere ist das untere Ende der Trennwand 46 auf der Höhe des Überströmkanals 19 angeordnet, wobei das obere Ende der Trennwand 46 beispielhaft an der Schachtdecke anliegt. Insbesondere erstreckt sich die Trennwand 46 über die gesamte Breite, insbesondere Tiefe, des Schachts und ist vorzugsweise parallel zu der dem Überströmkanal 19 gegenüberliegenden Schachtwand ausgerichtet. Die Trennwand 46 bildet vorzugsweise zusammen mit der Innenwand des Schachts 2, insbesondere des Regenativschachts 2b, die Kühlgasleitung 44 aus. Vorzugsweise ist die Trennwand 46 in einem dem Überströmkanal 19 abgewandten Bereich des Schachts 2 angeordnet. Die Kühlgasleitung 44 umfasst beispielhaft etwa 20 - 40%, vorzugsweise etwa 33% des Volumens der Brennzone 20 und der Vorwärmzone 21.

Der Kühlgasablass 42 zum Ablassen von Kühlgas aus der Kühlzone 22 ist in dem Ausführungsbeispiel der Fig. 6 zwischen der Trennwand 46 und der dem Überströmkanal 19 gegenüberliegenden Schachtwand ausgebildet. Der Schachtofen 1 der Fig. 6 weist ebenfalls einen Kühlgasauslass 17 auf, der an einem oberen Ende der Vorwärmzone 21 angeordnet ist. Der Kühlgasauslass 17 des Brennschachts 2a ist vorzugsweise mit der Abgasrückführungsleitung verbunden, sodass über den Kühlgasauslass 17 im Brennbetrieb des jeweiligen Schachts 2 rezirkuliertes und mit Sauerstoff angereichertes Abgas in den Brennschacht 2a eingeführt wird. Insbesondere wird über den Kühlgasauslass 17 rezirkuliertes und mit Sauerstoff angereichertes Abgas in die Kühlgasleitung 44 zwischen der Trennwand 46 und der dem Überströmkanal 19 gegenüberliegenden Schachtwand eingeführt. Der GGR-Schachtofen 1 der Fig. 6 weist vorzugsweise einen weiteren Verbrennungsgaseinlass 12 in jedem Schacht auf, über welchen rezirkuliertes und mit Sauerstoff angereichertes Abgas in den Brennschacht 2a außerhalb der Kühlgasleitung 44 eingeführt wird. Vorzugsweise strömt die Kühlluft nach einer Erkenntnis der Erfinder, ausschließlich an dem äußeren, dem Überströmkanal 19 gegenüberliegenden Schachtabschnitt, sodass diese durch die Trennwand 46 gastechnisch von dem Verbrennungsgas der Brennzone 20 getrennt wird. Eine Vermischung der Brenngase und der Kühlgase wird somit zuverlässig verhindert.

Der Schachtofen 1 der Fig. 6 weist vorzugsweise eine Mehrzahl von Materialeinlässen 3 auf. Insbesondere weist der Schachtofen 1 in jedem Schacht 2 jeweils zumindest zwei Materialeinlässe 3 auf, wobei zumindest ein Materialeinlass der Kühlgasleitung 44 zugeordnet und derart angeordnet ist, dass zu brennendes Material der Kühlgasleitung 44 zugeführt wird. Die Leitung des aus der Kühlzone 22 und der Vorwärmzone 21 abgezogenen Kühlgases und des aus der Vorwärmzone 21 abgezogenen Abgases entsprechen in dem Ausführungsbeispiel der Fig. 1 bis 5 beschriebenen Verschaltung.

### Bezugszeichenliste

- 1: GGR-Schachtofen
- 2: Schacht
- 2a: Brennschacht
- 2b: Regenerativschacht
- 3: Materialeinlass / Schleuse
- 4: Regelorgan
- 6: Abgasauslass
- 7: Kühlgaszufuhrleitung
- 8: Regelorgan
- 9: Brennstoffleitung
- 10: Brennerlanzen
- 11: Kühlgasabzugsleitung
- 12: Verbrennungsgaseinlass
- 13: Trennelement
- 14: Oxidationsmittelleitung
- 15: Abgasrückführungsleitung
- 16: Filter
- 17: Kühlgasauslass
- 18: Seitenkanal / Ringkanal / materialfreier Raum
- 19: Überströmkanal
- 19a: erster Verbindungskanal
- 19b: zweiter Verbindungskanal
- 20: Brennzone
- 21: Vorwärmzone
- 22: Kühlzone
- 23: Kühlgaseinlass
- 24: Wärmetauscher
- 25: Auslasstrichter
- 26: Innenzylinder
- 30: Kühlgaseinlass
- 31: Abgasfilter
- 32: Kühleinrichtung
- 33, 34, 35: Verdichter
- 39: Abgasleitung
- 40: Materialauslass / Schleuse
- 41: Austragseinrichtung
- 42: Kühlgasablass
- 43: Kühlgaseinlass
- 44: Kühlgasleitung
- 45: Puffertank
- 46: Trennwand
- K: Kühlluft
- V: Verbrennungsabgas

## Patentansprüche

1. Gleichstrom-Gegenstrom-Regenerativ-Schachtofen (1) zum Brennen und Kühlen von Material, wie Karbonatgesteinen, mit zwei Schächten (2), die abwechselnd als Brennschacht (2a) und als Regenerativschacht (2b) betreibbar und mittels eines Überströmkanals (19) miteinander verbunden sind,
wobei jeder Schacht (2) in Strömungsrichtung des Materials eine Vorwärmzone (21) zum Vorwärmen des Materials, eine Brennzone (20) zum Brennen des Materials und eine Kühlzone (22) zum Kühlen des Materials aufweist,
wobei jeder Schacht (2) einen Abgasauslass (6) zum Auslassen von Abgas aus dem Schacht (2) aufweist,
**dadurch gekennzeichnet, dass**
der GGR-Schachtofen (1) eine Kühlgasleitung (44) zum Leiten von Kühlgas von der Kühlzone (22) in die Vorwärmzone (21) aufweist.

2. Gleichstrom-Gegenstrom-Regenerativ-Schachtofen (1) nach Anspruch 1, wobei die Kühlgasleitung (44) außerhalb oder innerhalb des Schachts (2) angeordnet ist.

3. Gleichstrom-Gegenstrom-Regenerativ-Schachtofen (1) nach einem der vorangehenden Ansprüche, wobei der Schachtofen (1) einen Kühlgasablass (42) zum Auslassen von Kühlgas aus der Kühlzone (22), aufweist und wobei der Kühlgasablass (42) innerhalb der Kühlzone (22) angeordnet ist und mit der Kühlgasleitung (44) gastechnisch verbunden ist.

4. Gleichstrom-Gegenstrom-Regenerativ-Schachtofen (1) nach einem der vorangehenden Ansprüche, wobei der Schachtofen (1) einen Kühlgaseinlass (43) in der Vorschwärmzone (21) zum Einlassen von Kühlgas in die Vorwärmzone (21) aufweist, der mit der Kühlgasleitung (44) gastechnisch verbunden ist.

5. Gleichstrom-Gegenstrom-Regenerativ-Schachtofen (1) nach Anspruch 4, wobei der Kühlgaseinlass (43) schlitzförmig ausgebildet ist.

6. Gleichstrom-Gegenstrom-Regenerativ-Schachtofen (1) nach einem der Ansprüche 1 bis 3, wobei der Schachtofen (1) eine Trennwand (46) aufweist, die innerhalb des Schachts (2) angeordnet ist und zumindest teilweise die Kühlgasleitung (44) ausbildet.

7. Gleichstrom-Gegenstrom-Regenerativ-Schachtofen (1) nach Anspruch 6, wobei der Kühlgasablass (44) zum Ablassen von Kühlgas aus der Kühlzone (22) zwischen der Trennwand (46) und der Innenwand des Schachts (2) ausgebildet ist.

8. Gleichstrom-Gegenstrom-Regenerativ-Schachtofen (1) nach einem der vorangehenden Ansprüche, wobei der Schachtofen (1) einen Kühlgasauslass (17) zum Auslassen des Kühlgases aus dem Schacht (2) aufweist und wobei der Kühlgasauslass (17) in der Vorwärmzone (21) des Schachts (2) angeordnet ist.

9. Gleichstrom-Gegenstrom-Regenerativ-Schachtofen (1) nach einem der vorangehenden Ansprüche, wobei in der Kühlgasleitung (44) zumindest ein oder eine Mehrzahl von Regelorganen (8) angeordnet sind, die derart ausgebildet sind, dass sie die Menge an Kühlluft von dem Kühlgasablass (42) und/ oder zu dem Kühlgaseinlass (43) steuern/regeln.

10. Gleichstrom-Gegenstrom-Regenerativ-Schachtofen (1) nach einem der vorangehenden Ansprüche, wobei der Überströmkanal (19) einen ersten Verbindungskanal (19a) und einen zweiten Verbindungskanal (19b) umfasst, die gasströmungstechnisch parallel zueinander angeordnet sind.

11. Gleichstrom-Gegenstrom-Regenerativ-Schachtofen (1) nach Anspruch 10, wobei der erste Verbindungskanal (19a) derart angeordnet und ausgebildet ist, dass ausschließlich das Abgas der Brennzone (20) in den ersten Verbindungskanal (19a) einströmbar ist.

12. Gleichstrom-Gegenstrom-Regenerativ-Schachtofen (1) nach Anspruch 10 oder 11, wobei der zweite Verbindungskanal (19b) derart angeordnet und ausgebildet ist, dass ausschließlich das Kühlgas der Kühlzone (22) in den zweiten Verbindungskanal (19b) einströmbar ist.

13. Verfahren zum Brennen von Material, wie Karbonatgesteinen, in einem Gleichstrom-Gegenstrom-Regenerativ-Schachtofen (1) mit zwei Schächten (2), die abwechselnd als Brennschacht und als Regenerativschacht betrieben werden und mittels eines Verbindungskanals (19) miteinander verbunden sind, wobei das Material durch einen Materialeinlass (3) in eine Vorwärmzone (21) zum Vorwärmen des Materials, eine Brennzone (20) zum Brennen des Materials und eine Kühlzone (22) zum Kühlen des Materials zu einem Materialauslass (40) strömt,
wobei ein Kühlgas in die Kühlzone eingelassen wird,
wobei Abgas über einen Abgasauslass (6) aus einem der Schächte (2) ausgelassen wird und
**dadurch gekennzeichnet, dass**
das Kühlgas aus der Kühlzone (22) mittels einer Kühlgasleitung (44) in die Vorwärmzone (21) geleitet wird.

14. Verfahren nach Anspruch 13, wobei das Kühlgas separat zu den Verbrennungsgasen der Brennzone (20) in der Kühlgasleitung (44) geleitet wird.

15. Verfahren nach Anspruch 13 oder 14, wobei das Kühlgas aus der Kühlzone (22) abgezogen und in die Vorwärmzone (21) eingeleitet wird.

16. Verfahren nach einem der Ansprüche 13 bis 15, wobei das über die Kühlgasleitung (44) in die Vorwärmzone (21) eingeleitete Kühlgas mittels einen Kühlgasauslasses (17) aus der Vorwärmzone (21) abgeführt wird.

## Claims

1. Parallel flow counterflow regenerative shaft kiln (1) for burning and cooling material, such as carbonate rocks, with two shafts (2) that can be operated alternately as a burning shaft (2a) and as a regenerative shaft (2b) and are connected to each other by means of an overflow channel (19),
wherein each shaft (2) has, in the direction of flow of the material, a preheating zone (21) for preheating the material, a burning zone (20) for burning the material, and a cooling zone (22) for cooling the material,
wherein each shaft (2) has an exhaust gas outlet (6) for discharging exhaust gas from the shaft (2),
**characterized in that**
the parallel flow counterflow regenerative shaft kiln (1) has a cooling gas line (44) for conducting cooling gas from the cooling zone (22) into the preheating zone (21).

2. Parallel flow counterflow regenerative shaft kiln (1) according to claim 1, wherein the cooling gas line (44) is arranged outside or inside the shaft (2).

3. Parallel flow counterflow regenerative shaft kiln (1) according to one of the preceding claims, wherein the shaft kiln (1) has a cooling gas outlet (42) for discharging cooling gas from the cooling zone (22), and wherein the cooling gas outlet (42) is arranged inside the cooling zone (22) and is connected to the cooling gas line (44) in a gas-technical manner.

4. Parallel flow counterflow regenerative shaft kiln (1) according to one of the preceding claims, wherein the shaft kiln (1) has a cooling gas inlet (43) in the preheating zone (21) for admitting cooling gas into the preheating zone (21), which is connected to the cooling gas line (44) in a gas-technical manner.

5. Parallel flow counterflow regenerative shaft kiln (1) according to claim 4, wherein the cooling gas inlet (43) is designed in the form of a slot.

6. Parallel flow counterflow regenerative shaft kiln (1) according to one of claims 1 to 3, wherein the shaft kiln (1) has a partition wall (46) which is arranged inside the shaft (2) and at least partially forms the cooling gas line (44).

7. Parallel flow counterflow regenerative shaft kiln (1) according to claim 6, wherein the cooling gas outlet (44) for discharging cooling gas from the cooling zone (22) is formed between the partition wall (46) and the inner wall of the shaft (2).

8. Parallel flow counterflow regenerative shaft kiln (1) according to one of the preceding claims, wherein the shaft kiln (1) has a cooling gas outlet (17) for discharging the cooling gas from the shaft (2) and wherein the cooling gas outlet (17) is arranged in the preheating zone (21) of the shaft (2).

9. Parallel flow counterflow regenerative shaft kiln (1) according to one of the preceding claims, wherein at least one or a plurality of control elements (8) are arranged in the cooling gas line (44), which are designed in such a way that they control/regulate the amount of cooling air from the cooling gas outlet (42) and/or to the cooling gas inlet (43).

10. Parallel flow counterflow regenerative shaft kiln (1) according to one of the preceding claims, wherein the overflow channel (19) comprises a first connecting channel (19a) and a second connecting channel (19b), which are arranged parallel to each other in terms of gas flow.

11. Parallel flow counterflow regenerative shaft kiln (1) according to claim 10, wherein the first connecting channel (19a) is arranged and designed such that only the exhaust gas from the combustion zone (20) can flow into the first connecting channel (19a).

12. Parallel flow counterflow regenerative shaft kiln (1) according to claim 10 or 11, wherein the second connecting channel (19b) is arranged and designed such that only the cooling gas from the cooling zone (22) can flow into the second connecting channel (19b).

13. Method for burning material, such as carbonate rocks, in a Parallel flow counterflow regenerative shaft kiln (1) with two shafts (2) which are operated alternately as a burning shaft and as a regenerative shaft and are connected to each other by means of a connecting channel (19), wherein the material is fed through a material inlet (3) into a preheating zone (21) for preheating the material, a burning zone (20) for burning the material, and a cooling zone (22) for cooling the material to a material outlet (40),
wherein a cooling gas is admitted into the cooling zone,
wherein exhaust gas is discharged from one of the shafts (2) via an exhaust gas outlet (6), and
**characterized in that**
the cooling gas is fed from the cooling zone (22) into the preheating zone (21) by means of a cooling gas line (44).

14. Method according to claim 13, wherein the cooling gas is fed separately from the combustion gases of the combustion zone (20) into the cooling gas line (44).

15. Method according to claim 13 or 14, wherein the cooling gas is extracted from the cooling zone (22) and fed into the preheating zone (21).

16. Method according to one of claims 13 to 15, wherein the cooling gas introduced into the preheating zone (21) via the cooling gas line (44) is discharged from the preheating zone (21) by means of a cooling gas outlet (17).

## Revendications

1. Four à cuve à contre-courant à courant continu (1) pour la cuisson et le refroidissement de matériaux, tels que des roches carbonatées, comprenant deux cuves (2) qui peuvent fonctionner alternativement comme cuve de cuisson (2a) et comme cuve de régénération (2b) et qui sont reliées entre elles au moyen d'un canal de transfert (19),
chaque cuve (2) comportant, dans le sens d'écoulement des matériaux, une zone de préchauffage (21) pour préchauffer les matériaux, une zone de cuisson (20) pour cuire les matériaux et une zone de refroidissement (22) pour refroidir les matériaux,
chaque cuve (2) comportant une sortie de gaz d'échappement (6) pour évacuer les gaz d'échappement de la cuve (2),
**caractérisé en ce que**
le four à cuve GGR (1) comprend une conduite de gaz de refroidissement (44) pour acheminer le gaz de refroidissement de la zone de refroidissement (22) vers la zone de préchauffage (21).

2. Four à cuve à courant parallèle et à contre-courant régénératif (1) selon la revendication 1, dans lequel la conduite de gaz de refroidissement (44) est disposée à l'extérieur ou à l'intérieur de la cuve (2).

3. Four à cuve à courant continu à contre-courant et à régénération (1) selon l'une des revendications précédentes, le four à cuve (1) comportant une évacuation de gaz de refroidissement (42) pour évacuer le gaz de refroidissement de la zone de refroidissement (22), et dans lequel la sortie de gaz de refroidissement (42) est disposée à l'intérieur de la zone de refroidissement (22) et est reliée à la conduite de gaz de refroidissement (44) sur le plan technique.

4. Four à cuve à courant continu et à contre-courant régénératif (1) selon l'une des revendications précédentes, le four à cuve (1) comportant une entrée de gaz de refroidissement (43) dans la zone de préchauffage (21) pour admettre du gaz de refroidissement dans la zone de préchauffage (21), qui est reliée à la conduite de gaz de refroidissement (44) sur le plan technique.

5. Four à cuve à courant continu et à contre-courant régénératif (1) selon la revendication 4, l'entrée de gaz de refroidissement (43) étant réalisée sous forme de fente.

6. Four à cuve à courant continu et à contre-courant régénératif (1) selon l'une des revendications 1 à 3, le four à cuve (1) comportant une cloison (46) qui est disposée à l'intérieur de la cuve (2) et qui forme au moins en partie la conduite de gaz de refroidissement (44).

7. Four à cuve à courant continu à contre-courant et à régénération (1) selon la revendication 6, dans lequel la sortie de gaz de refroidissement (44) destinée à évacuer le gaz de refroidissement de la zone de refroidissement (22) est formée entre la cloison (46) et la paroi intérieure de la cuve (2).

8. Four à cuve à courant continu à contre-courant et à régénération (1) selon l'une des revendications précédentes, dans lequel le four à cuve (1) comporte une sortie de gaz de refroidissement (17) pour évacuer le gaz de refroidissement de la cuve (2) et dans lequel la sortie de gaz de refroidissement (17) est disposée dans la zone de préchauffage (21) de la cuve (2).

9. Four à cuve à courant continu à contre-courant et à régénération (1) selon l'une des revendications précédentes, dans lequel au moins un ou plusieurs organes de régulation (8) sont disposés dans la conduite de gaz de refroidissement (44), lesquels sont conçus de manière à commander/réguler la quantité d'air de refroidissement provenant de la sortie de gaz de refroidissement (42) et/ou vers l'entrée de gaz de refroidissement (43).

10. Four à cuve à courant continu à contre-courant et à régénération (1) selon l'une des revendications précédentes, dans lequel le canal de transfert (19) comprend un premier canal de liaison (19a) et un deuxième canal de liaison (19b) qui sont disposés parallèlement l'un à l'autre du point de vue de la technique des écoulements gazeux.

11. Four à cuve à courant continu à contre-courant et à régénération (1) selon la revendication 10, le premier canal de liaison (19a) étant disposé et conçu de telle sorte que seuls les gaz d'échappement de la zone de combustion (20) puissent s'écouler dans le premier canal de liaison (19a).

12. Four à cuve à courant parallèle et à contre-courant régénératif (1) selon la revendication 10 ou 11, dans lequel le deuxième canal de liaison (19b) est disposé et conçu de telle sorte que seul le gaz de refroidissement de la zone de refroidissement (22) puisse s'écouler dans le deuxième canal de liaison (19b).

13. Procédé de cuisson de matériaux, tels que des roches carbonatées, dans un four à cuve à courant parallèle et à contre-courant (1) comportant deux cuves (2) qui sont exploitées alternativement comme cuve de cuisson et comme cuve de régénération et qui sont reliées entre elles au moyen d'un canal de liaison (19), le matériau étant acheminé par une entrée de matériau (3) dans une zone de préchauffage (21) pour préchauffer le matériau, une zone de cuisson (20) pour cuire le matériau et une zone de refroidissement (22) pour refroidir le matériau jusqu'à une sortie de matériau (40),
un gaz de refroidissement étant admis dans la zone de refroidissement,
les gaz d'échappement étant évacués par une sortie de gaz d'échappement (6) à partir de l'un des puits (2) et
**caractérisé en ce que**
le gaz de refroidissement provenant de la zone de refroidissement (22) est acheminé vers la zone de préchauffage (21) au moyen d'une conduite de gaz de refroidissement (44).

14. Procédé selon la revendication 13, dans lequel le gaz de refroidissement est acheminé séparément des gaz de combustion de la zone de combustion (20) dans la conduite de gaz de refroidissement (44).

15. Procédé selon la revendication 13 ou 14, dans lequel le gaz de refroidissement est extrait de la zone de refroidissement (22) et acheminé vers la zone de préchauffage (21).

16. Procédé selon l'une des revendications 13 à 15, dans lequel le gaz de refroidissement introduit dans la zone de préchauffage (21) via la conduite de gaz de refroidissement (44) est évacué de la zone de préchauffage (21) au moyen d'une sortie de gaz de refroidissement (17).
